# EUROPÄISCHE PATENTSCHRIFT

(11) **EP 1 412 759 B1**
(45) Veröffentlichungstag und Bekanntmachung des Hinweises auf die Patenterteilung: **21.12.2005**
(21) Anmeldenummer: 02727371.3
(22) Anmeldetag: 07.03.2002
(51) Int. Cl.: G01N 35/10

(54) **VERFAHREN UND VORRICHTUNG ZUR BEURTEILUNG EINES FLÜSSIGKEITSDOSIERUNGSVORGANGS**
METHOD AND DEVICE FOR EVALUATING A LIQUID DOSING PROCESS
PROCEDE ET DISPOSITIF D'EVALUATION D'UN PROCESSUS DE DOSAGE DE LIQUIDE

(30) Priorität: 09.03.2001 DE 10111423; 02.10.2001 DE 10148608
(43) Veröffentlichungstag der Anmeldung: 28.04.2004
(73) Patentinhaber: Hamilton Bonaduz AG, CH-7402 Bonaduz (CH)
(72) Erfinder: CAMENISCH, Johann, L., CH-7000 Chur (CH)
(74) Vertreter: Prechtel, Jörg
(86) Internationale Anmeldenummer: PCT/EP2002/002521
(87) Internationale Veröffentlichungsnummer: WO 2002/073215

(56) Entgegenhaltungen:
- EP-A- 0 982 593
- EP-A- 0 990 909
- EP-A- 1 048 953
- WO-A-01/88549
- WO-A-92/08545
- WO-A-98/53325
- US-A- 5 463 895

## Beschreibung

Die vorliegende Erfindung betrifft Verfahren und Vorrichtungen zur Beurteilung eines Flüssigkeitsdosierungsvorgangs in einer zumindest teilweise mit einem Gas gefüllten Pipette.

Dosierungsvorgänge von Flüssigkeiten sind häufig Bestandteil von Misch- oder Analyseverfahren, bei welchen exakte Dosen von Flüssigkeiten aus Flüssigkeitsmengen entnommen und beispielsweise miteinander vermischt werden. Dosierungsvorgänge von Flüssigkeiten sind in chemischen, pharmazeutischen, medizinischen und humanbiologischen Verfahren an der Tagesordnung. Viele dieser Dosierungsvorgänge sind Bestandteil eines Herstellungsverfahrens zur Erzeugung von pharmazeutischen oder medizinischen Wirkstoffen und Heilmitteln oder tragen zur medizinischen Diagnose von Krankheiten bei. Unerkannte fehlerhafte Flüssigkeitsdosierungen können daher zu Produkten führen, die für die Gesundheit von Lebewesen, insbesondere des Menschen, bedenklich oder sogar gefährlich sind. Doch selbst wenn in einer betrieblichen oder klinischen Qualitätssicherungsstufe fehlerhafte Flüssigkeitsdosierungen erkannt werden, besteht immer noch die Gefahr, dass durch unnötig zahlreiche Ausschuss-Dosierungen wertvolle und unter Umständen nur begrenzt vorhandene Substanzen vergeudet werden.

Es ist daher von großer Wichtigkeit, Flüssigkeitsdosierungsvorgänge so früh wie möglich mit größtmöglicher Sicherheit ob ihres fehlerfreien Ablaufs beurteilen zu können.

Aus dem Stand der Technik sind beispielsweise für einen Aspirationsvorgang, d. h. für das Ansaugen einer Flüssigkeit, und für einen Dispensationsvorgang, d. h. für das Abgeben einer Flüssigkeit, beim Pipettieren verschiedene Verfahren zur Beurteilung eines Flüssigkeitsdosierungsvorgangs bekannt.

Bei einem Aspirationsvorgang wird zunächst die Pipettierspitze in die aufzunehmende Flüssigkeit eingetaucht. Dadurch wird eine in einem durch Pipettierspitzenöffnung, Pipettierspitzeninnenwand und Kolben begrenzten Flüssigkeitsaufnahmeraum vorhandene Gasmenge abgeschlossen und von dem Gasvolumen der Umgebung getrennt, so dass die in der Pipettierspitze vorhandene Gasmenge in etwa, d. h. abgesehen von Verdampfungs- und Kondensationsvorgängen, konstant bleibt. Durch eine Ansaug-Bewegung des Pipettierkolbens von der Pipettierspitze weg wird das Volumen der abgeschlossenen Gasmenge vergrößert, wodurch der Druck des Gases in dem Flüssigkeitsaufnahmeraum sinkt. Ab einem bestimmten Druckunterschied zwischen dem Gasdruck im Flüssigkeitsaufnahmeraum und dem der Umgebung beginnt Flüssigkeit durch die Pipettierspitzenöffnung in den Flüssigkeitsaufnahmeraum einzuströmen. Durch die einströmende Flüssigkeit sinkt die Gasvolumenänderungsgeschwindigkeit und damit die Gasdruckänderungsgeschwindigkeit im Flüssigkeitsaufnahmeraum.

Bei den bekannten Verfahren zur Beurteilung eines Flüssigkeitsdosierungsvorgangs wird überwacht, ob der Gasdruck im Flüssigkeitsaufnahmeraum unter einen vorbestimmten Grenzwert fällt. Bei manchen Verfahren wird neben dem Unterschreiten eines Grenzwerts zusätzlich die Änderungsgeschwindigkeitdes Drucks des im Flüssigkeitsaufnahmeraum eingeschlossenen Gases beobachtet, d. h. es wird geprüft, ob sich der Gasdruck im Flüssigkeitsaufnahmeraum in einer vorbestimmten Zeit um einen vorbestimmten Betrag ändert. Diese Prüfung kann graphisch durch Vergleichen der Steigung einer Druck-Zeit-Kurve mit einer vorbestimmten Steigung oder auch analytisch durch Vergleichen entsprechender Druck-Zeit-Wertepaare erfolgen.

Für den Dispensationsvorgang, bei welchem das Volumen einer zwischen einer aufgenommenen Flüssigkeit und dem Pipettierkolben eingeschlossenen Gasmenge durch eine Ausschiebe-Bewegung des Pipettierkolbens auf die Pipettieröffnung zu verkleinert wird, gilt das zuvor beschriebene Beurteilungsverfahren entsprechend. Es gilt allgemein, dass der Dosierungsvorgang als fehlerfrei beurteilt wird, wenn der Druck des im Flüssigkeitsaufnahmeraum eingeschlossenen Gases einen bestimmten Grenzwert erreicht oder unter- bzw. überschreitet oder/und wenn die zeitliche Änderung des Drucks einen bestimmten Grenzwert erreicht oder unter- bzw. überschreitet.

Nachteilig an diesem Verfahren des Standes der Technik ist, dass sich die Beurteilung, ob der Flüssigkeitsdosierungsvorgang fehlerfrei abgelaufen ist oder nicht, nur auf einige wenige Messwerte stützt, die in der Regel zu Beginn des Dosierungsverfahrens gemessen werden. Ein Fehler, der nach dem Erreichen des Gasdruck-Grenzwerts auftritt, wird von diesem Verfahren nicht mehr erfasst. Ein derartiger Fehler kann beispielsweise auftreten, wenn die Pipettierspitzenöffnung während des Einströmens von Flüssigkeit in die Pipettierspitze durch einen in der Flüssigkeit vorhandenen Festkörper verstopft wird. Dies kann bei der Dosierung von Blut der Fall sein, wenn etwa geronnene Bestandteile im flüssigen Blut vorhanden sind.

Die WO 92/08545 A1 beschreibt ein Verfahren zur Beurteilung eines Flüssigkeitsdosierungsvorgangs, der in eine Vielzahl von Teildosierungen unterteilt ist. Nach jeder Teildosierung wird bei stillstehendem Kolben der Gasdruck in einer zu einer Pipettierspitze führenden Leitung gemessen und mit oberen und unter Schwellenwerten verglichen, die in ihrer Abfolge einen einer Sollkurve folgenden Sollwertebereich ergeben. Dabei wird überprüft, ob ein Messpunkt innerhalb des Sollwertebereichs liegt oder nicht.

Die WO 98/53325 A1 offenbart ein Verfahren zur Flüssigkeitsdosierung, bei welchem ein Druck einer Flüssigkeit in einer mit einer Pipette verbundenen Leitung für die Zeit, in der sich der Pipettierkolben bewegt, kontinuierlich überwacht wird. Es ist die Möglichkeit genannt, ein so erhaltenes Druckprofil mit einem vorbestimmten Druckprofil zu vergleichen, um den Ablauf der Dosierung zu beurteilen. Dazu sind mehrere Beurteilungsverfahren offenbart bei welchen jeweils lediglich einzelne Werte zu einem Mittelwert oder Integralwert zusammen gefasst und zur Beurteilung des Dosierungsvorgangs herangezogen werden.

Aus der EP 0 982 593 A1 ist eine Vorrichtung zur Überwachung von Pipettiervorgängen von einer Flüssigkeit in eine weitere Flüssigkeit bekannt. Die weitere Flüssigkeit wird mit Licht durchstrahlt, das in einem Detektor erfasst wird.

Aus der EP 0 990 909 A1 ist ein Verfahren zur Überwachung von Pipettiervorgängen bekannt, bei welchem während eines Dosierungsvorgangs mit Drucksensoren vier Druckwerte gemessen und mit Schwellenwerten verglichen werden. Durch einen Vergleich mit weiteren Schwellenwerten können charakteristische Fehler an der Pipettiervorrichtung oder während des Vorgangs erfasst und erkannt werden.

Es ist Aufgabe der vorliegenden Erfindung, eine Lehre anzugeben, welche es dem Fachmann ermöglicht, Flüssigkeitsdosierungsvorgänge möglichst schnell auszuführen und trotzdem hinsichtlich ihres erfolgreichen Ablaufs sicher zu beurteilen und fehlerhafte Dosierungen frühzeitig zu erkennen.

Nach einem ersten Gesichtspunkt der vorliegenden Erfindung wird die Aufgabe gelöst durch ein Verfahren zur Beurteilung eines Flüssigkeitsdosierungsvorgangs mit den Merkmalen des Anspruchs 1.

Durch das Erfassen wenigstens einer Zustandsgröße eines in der Pipette vorhandenen Mediums über im Wesentlichen die gesamte Dauer des Dosierungsvorgangs steht Information über den Füllungszustand der Pipette im Wesentlichen für den gesamten Dosierungsvorgang zur Verfügung und kann zu dessen Beurteilung herangezogen werden. Durch Vergleichen des im Wesentlichen gesamten zeitlichen Verlaufs der wenigstens einen Zustandsgröße mit einem Zustandsgrößen-Sollwertebereich können zu beliebigen Zeitpunkten während des Dosierens auftretende abnormale Werte der wenigstens einen Zustandsgröße gefunden und so der Dosierungsvorgang zuverlässig beurteilt werden.

Der Zustandsgrößen-Sollwertebereich ist einer Sollkurve folgend definiert, wobei zur Beurteilung des Dosierungsvorgangs ermittelt wird, ob der zeitliche Verlauf der wenigstens einen Zustandsgröße innerhalb des Zustandsgrößen-Sollwertebereichs liegt, und in Abhängigkeit vom Ermittlungsergebnis ein Beurteilungsergebnis ausgeben wird. Es handelt sich dabei um einen sehr einfach durchzuführenden Vergleich, mit dem der Dosierungsvorgang zuverlässig beurteilt werden kann.

Der Zustandsgrößen-Sollwertebereich kann beispielsweise ein u. U. mit einer Toleranzzugabe versehener, idealisierter Zustandsgrößenverlauf sein.

Der im folgenden verwendete Ausdruck "Gefäß" bezeichnet ausschließlich Pipetten.

Die Zustandsgröße kann in jedem beliebigen, in dem Gefäß vorhandenen Medium erfasst werden. Bei Pipetten kann durch Erfassung wenigstens einer Zustandsgröße des in dem Gefäß vorhandenen Gases ein besonders ge-naues Ergebnis erhalten werden, da die im Gefäß eingeschlossene Gasmenge im Gegensatz zur ein- oder ausströmenden Flüssigkeit fast ausschließlich durch die zu dosierende Flüssigkeit beeinflusst wird und ein Einfluss durch die Umgebung des Gefäßes nahezu ausgeschlossen ist.

Ein weiterer Vorteil einer Erfassung wenigstens einer Zustandsgröße des in dem Gefäß vorhandenen Gases liegt darin, dass dadurch auch Dosierungsvorgänge mit geringeren Dosierungsmengen beurteilt werden können als bei einer Erfassung einer Zustandsgröße der dosierten Flüssigkeit selbst, da die Flüssigkeit in stärkerem Maße als das Gas Adhäsions- oder/und Reibungswechselwirkungen mit der Gefäßwand unterliegt. Diese Wechselwirkungen werden erst ab einer gewissen Mindestflüssigkeitsmenge vernachlässigbar.

Das erfindungsgemäße Verfahren ist mit jeder Art von Gas, d. h. in jeder Art von Gasatmosphäre, durchführbar. Im einfachsten und häufigsten Fall wird der Dosierungsvorgang in Umgebungsluft durchgeführt, weshalb die Gefäße in diesem Fall mit Luft gefüllt sind. Es ist jedoch auch denkbar, dass Flüssigkeiten zu dosieren sind, deren Kontakt mit Luft oder Sauerstoff nicht erwünscht ist. In diesem Fall kann das erfindungsgemäße Verfahren auch bei einer Dosierung in einer inerten oder quasi-inerten Atmosphäre wie z. B. Argon-, Stickstoff- oder Kohlendioxidatmosphäre, eingesetzt werden.

Als Zustandsgröße kommt, wie bereits beschrieben, für eine Messung in der im Gefäß vorhandenen Flüssigkeit der hydrostatische Druck, für eine Messung im Gas der Gasdruck und/oder die Temperatur in Frage. Da die im Gefäß vorhandene Gasmenge, d. h. die Gasmasse, bei vielen Dosiergefäßen während des Dosierungsvorgangs in etwa konstant bleibt, jedoch durch Bewegung eines Kolbens das Volumen der Gasmenge geändert wird, ändern sich mit dem Volumen der Druck und, je nach Ausführung des Dosierungsvorgangs, auch die Temperatur des Gases. Bei besonders langsamen Gasvolumenänderungen im Gefäß kann näherungsweise von einer isothermen Volumenänderung ausgegangen werden. In diesem Falle macht die Messung lediglich des Drucks Sinn. Bei besonders schnellen Volumenänderungen kann näherungsweise von einer adiabaten Zustandsänderung ausgegangen werden, weshalb bei Kenntnis des dem Gas zugeordneten Adiabatenexponenten entweder der Druck oder die Temperatur als Zustandsgröße erfasst werden können. Die höchste Genauigkeit und Sicherheit erhält man jedoch, wenn man sowohl Druck als auch Temperatur des Gases erfasst, da dadurch ein wechselseitiges Kontrollieren der Funktionstüchtigkeit der Zustandsgrößenerfassungssensoren erfolgen kann.

Für die Erfassung einer Zustandsgröße reicht es aus, eine Größe zu erfassen, die sich in einer bekannten Beziehung mit der Zustandsgröße ändert.

Vorteilhafterweise ist der Zustandsgrößen-Sollwertebereich wenigstens für die gesamte Dauer des Flüssigkeitsdosierungsvorgangs definiert. In diesem Falle ist es möglich, den Flüssigkeitsdosierungsvorgang nicht nur in bestimmten Zeitabschnitten, sondern tatsächlich zu jedem Zeitpunkt des Dosierungsvorgangs zu beurteilen.

Dies bedeutet jedoch nicht, dass der Zustandsgrößen-Sollwertebereich nur für die Zeitdauer der Änderung der Flüssigkeitsmenge im Gefäß definiert ist. Es kann darüber hinaus sinnvoll sein, die Zustandsgröße auch vor oder/und nach der Phase der Änderung der Flüssigkeitsmenge im Gefäß zu erfassen und dementsprechend den Zustandsgrößen-Sollwertebereich auch auf diese Zeitabschnitte auszudehnen. So kann eine etwaige Transportphase zwischen der Aspirationsphase und der Dispensationsphase überwacht werden z. B. auf Flüssigkeitsverlaust durch Tropfenbildung und Tropfenverlaust oder gar Verlust des Pipettier-Tips (Pippettenspitze).

Das genaue Vorgehen zur Erfassung derartiger der Flüssigkeitsdosierung vor- und nachgelagerter Vorgänge wird weiter unten anhand eines Ausführungsbeispiels beschrieben werden.

Aus Gründen einer größtmöglichen Anschaulichkeit und eines einfachen Verständnisses der erhaltenen Beurteilungserbnisse kann der Zustandsgrößen-Sollwertebereich vorteilhaft derart definiert sein, dass der Flüssigkeitsdosierungsvorgang als fehlerfrei beurteilt wird, solange der erfasste zeitliche Verlauf der wenigstens einen Zustandsgröße innerhalb des Zustandsgrößen-Bereichs liegt und dass er als fehlerhaft beurteilt wird, wenn ermittelt wird, dass der erfasste zeitliche Verlauf der wenigstens einen Zustandsgröße zumindest abschnittsweise außerhalb des Zustandsgrößen-Sollbereichs liegt.

Beispielsweise kann eine Pipettenöffnung vorübergehend durch einen Festkörper verstopft oder in ihrem Querschnitt verengt sein, wobei der Festkörper nach einer Verharrungszeit durch die ein- oder ausströmende Flüssigkeit fortgespült wird. In diesem Falle würde der Gasdruck im Inneren der Pipettenspitze beispielsweise bei einem Aspirationsvorgang stark abfallen (oder/und die Gastemperatur würde stark abfallen), so dass die Zustandsgröße ihren Sollwertebereich verlässt. Nach der Beseitigung der Störung kann die Zustandsgröße wieder Werte annehmen, die innerhalb des Sollwertebereichs liegen. Da jedoch während des Auftretens der Störung undefinierte Strömungsverhältnisse an der Pipettenspitze vorlagen, ist es sinnvoll, eine Pipettierung bereits dann als fehlerhaft zu beurteilen, wenn ermittelt wird, dass der erfasste zeitliche Verlauf der wenigstens einen Zustandsgröße zumindest abschnittsweise außerhalb des Zustandsgrößen-Sollwertebereichs liegt.

Ein weiterer Vorteil des erfindungsgemäßen Verfahrens liegt in der Möglichkeit, über die Beurteilung eines korrekten Ablaufs des Dosierungsvorgangs hinaus, im Falle des Auftretens eines Fehlers diesen hinsichtlich seiner Fehlerart zu diagnostizieren. Dazu ist es vorteilhaft, dass dann, wenn der zeitliche Verlauf der wenigstens einen Zustandsgröße als zumindest abschnittsweise außerhalb des Zustandsgrößen-Sollbereichs liegend erfasst wird, ermittelt wird, ob der Verlauf der wenigstens einen Zustandsgröße zumindest abschnittsweise in wenigstens einem Fehlerbereich von einer Mehrzahl von Fehlerbereichen eines außerhalb des Zustandsgrößen-Sollbereichs liegenden Zustandsgrößen-Wertebereichs liegt. In Abhängigkeit von dem wenigstens einen durchlaufenen Fehlerbereich wird dann eine Fehlermeldung ausgegeben.

Verlässt der zeitliche Verlauf der wenigstens einen Zustandsgröße den Zustandsgrößen-Sollwertebereich, so befindet sich der zeitliche Verlauf der wenigstens einen Zustandsgröße in einem außerhalb des Zustandsgrößen-Sollwertebereichs liegenden Zustandsgrößen-Wertebereich. Dabei treten üblicherweise unterschiedliche Fehlerarten zu unterschiedlichen Zeiten auf oder/und führen zu unterschiedlichen Abweichungen des Zustandsgrößenwerts vom Zustandsgrößen-Sollwertebereich. Es ist daher möglich, den den Zustandsgrößen-SollwertebereichumgebendenZustandsgrößen-Wertebereich in wenigstens einen Fehlerbereich, vorzugsweise eine Mehrzahl von Fehlerbereichen, zu unterteilen. Dabei ist jedem Fehlerbereich vorteilhafterweise genau ein Fehler, unter Umständen jedoch auch eine Mehrzahl von Fehlern, zugeordnet. Im Falle mehrerer Fehlerbereiche sind diese zeitlich oder/und durch ggf. zeitveränderliche Zustandsgrößen-Schwellenwerte voneinander abgegrenzt.

Ebenso kann der Zustandsgrößen-Sollwertebereich durch eine obere und eine untere Schwellenkurve vom übrigen Zustandsgrößen-Wertebereich abgegrenzt sein. Als obere Schwellenkurve wird dabei die Schwellenkurve bezeichnet, welche den Zustandsgrößen-Sollwertebereich zu höheren Zustandsgrößenwerten hin begrenzt. Die untere Schwellenkurve ist dementsprechend die den Zustandsgrößen-Sollwertebereich zu niedrigeren Zustandsgrößenwerten hin begrenzende Schwellenkurve. Die Schwellenkurven können Funktionen der Zeit sein und sind dies in der Regel auch, da der Zustandsgrößen-Sollwertebereich meist einer nicht-trivialen Sollkurve folgt. In diesem Falle kann die Ermittlung, ob der zeitliche Verlauf der wenigstens einen Zustandsgröße innerhalb des vorbestimmten Zustandsgrößen-Sollwertebereichs liegt, auf einfache Art und Weise durch einen Vergleich des zeitlichen Verlaufs mit der oberen Schwellenkurve und der unteren Schwellenkurve durchgeführt werden.

Als Alternative dazu kann die Ermittlung, ob der zeitliche Verlauf der wenigstens einen Zustandsgröße innerhalb des vorbestimmten Zustandsgrößen-Sollwertebereichs liegt, auch durch Bildverarbeitung durchgeführt werden. Ein bildverarbeitendes Ermittlungsverfahren wird durch das erfindungsgemäße Verfahren insoweit begünstigt, als sich die im Verfahren verwendeten Datengrundlagen, wie z. B. zeitlicher Verlauf wenigstens einer Zustandsgröße, Zustandsgrößen-Sollwertebereich sowie gewünschtenfalls eine Mehrzahl von Fehlerbereichen besonders gut für eine graphische Darstellung und Auswertung eignen.

Die Qualität der mit dem erfindungsgemäßen Verfahren erreichten Beurteilung des Flüssigkeitsdosierungsvorgangs hängt in großem Maße von dem für die Beurteilung herangezogenen Zustandsgrößen-Sollwertebereich ab. Ist der Zustandsgrößen-Solfwertebereich sehr breit gefasst, besteht die Gefahr, dass bereits fehlerhafte Dosierungsvorgänge noch als fehlerfrei beurteilt werden. Umgekehrt birgt ein sehr eng gefasster Zustandsgrößen-Sollwertebereich das Risiko, dass fehlerfreie Dosierungsvorgänge als fehlerhaft beurteilt werden.

Ein für die Beurteilung von Flüssigkeitsdosierungsvorgängen besonders geeigneter Zustandsgrößen-Sollwertebereich eines bestimmten Flüssigkeitsdosiervorgangs kann dadurch erhalten werden, dass man den im Wesentlichen gleichen Flüssigkeitsdosiervorgang unter Verwendung der im Wesentlichen gleichen Vorgangsparameter wiederholt durchführt und dabei den zeitlichen Verlauf der wenigstens einen Zustandsgröße erfasst. Die Verwendung "im Wesentlichen gleicher Vorgangsparameter" bedeutet dabei, dass nach Möglichkeit die gleiche Flüssigkeit (oder zumindest eine Flüssigkeit im Wesentlichen gleicher Viskosität, Oberflächenspannung etc.) bei im Wesentlichen gleicher Umgebungstemperatur in das im Wesentlichen gleiche Gefäß, d. h. ein Gefäß derselben Bauart, z. B. derselben Bestellnummer desselben Herstellers, in der im Wesentlichen gleichen Gasatmosphäre mit im Wesentlichen gleichen Betriebseinstellungen einer Dosierungsvorrichtung dosiert wird. Zu den Betriebseinstellungen einer Dosiervorrichtung zählt beispielsweise die Dosiergeschwindigkeit in Flüssigkeitsvolumen pro Zeiteinheit oder Flüssigkeitsgewicht pro Zeiteinheit.

Die beim praktischen Einsatz einer Dosiereinrichtung auftretende Streuung oder auch auf eine Exemplarstreuung der Dosiereinrichtung zurückzuführende der Vorgangsparameter wie z.B. Messtemperatur, Dosiergeschwindigkeit und, wie bereits erwähnt, Gefäßform, soll also unter "im Wesentlichen gleich" subsummiert werden, so dass der so ermittelte Sollwertbereich diese Parameter-Streuung berücksichtigt.

Nach mehrmaligem Durchführen des Flüssigkeitsdosiervorgangs erhält man, vorausgesetzt jeder einzelne Dosierungsvorgang ist fehlerfrei abgelaufen, eine Schar von zeitlichen Verläufen der wenigstens einen Zustandsgröße, deren Einhüllende weiteren Durchführungen dieses Flüssigkeitsdosierungsvorangs als Zustandsgrößen-Sollwertebereich zugrundegelegt werden kann. Je nach der Sicherheitsrelevanz der dosierten Flüssigkeitsmenge oder nach dem Wert der dosierten Flüssigkeit kann die Einhüllende der Mehrzahl von zeitlichen Verläufen der wenigstens einen Zustandsgröße um einen Toleranzbetrag vergrößert oder verkleinert werden und die so erweiterte bzw. reduzierte Einhüllende als Sollwertebereich verwendet werden.

Alternativ dazu kann die Schar von zeitlichen Verläufen der wenigstens einen Zustandsgröße auch zu einer Referenzkurve zusammengefasst werden, beispielsweise durch Mittelwertbildung. Diese so vorbestimmte Referenzkurve kann, mit einem beidseitigem Toleranzfeld (± n-6) versehen, ebenfalls als Zustandsgrößen-Sollwertebereich dienen.

Die vorstehend genannte Aufgabe wird gemäß einem weiteren Aspekt der vorliegenden Erfindung auch gelöst durch ein Verfahren mit den Merkmalen des Anspruchs 6.

Gemäß diesem erfindungsgemäßen Verfahren, kann aus dem zeitlichen Verlauf der wenigstens einen Zustandsgröße durch Korrelationsrechenverfahren ein Übereinstimmungsgrad des zeitlichen Verlaufs der wenigstens einen Zustandsgröße mit der vorbestimmten Referenzkurve ermittelt und in Abhängigkeit vom Ermittlungsergebnis ein Beurteilungsergebnis den Dosierungsvorgang betreffend ausgegeben werden. Durch Einsatz von Korrelationsrechenverfahren sind sehr genaue Vergleiche des zeitlichen Verlaufs der wenigstens einen Zustandsgröße mit der vorbestimmten Referenzkurve möglich. Außerdem kann durch Ausführen eines Korrelationsrechenverfahrens und durch Hinterlegung einer Referenzkurve für bestimmte Betriebsparameter der zur Speicherung des Zustandsgrößen-Sollwertebereichs nötige Speicherplatz und die für den Vergleich mit einem aktuellen Zustandsgrössenverlauf benötigte Rechenzeit reduziert werden. Dadurch kann auch der zu beurteilende Dosiervorgang schneller ablaufen. Der errechnete Korrelationskoeffizient kann als Qualitätskennzahl dienen.

Als Korrelationsverfahren kommen bekannte Verfahren, wie z.B. die Fast-Fourier-Transformation, Polynomregression, Regressionsverfahren im Allgemeinen, Wavelets und Differenzenbildung in Frage.

Derartige Korrelationsrechenverfahren geben den Übereinstimmungsgrad zwischen zwei Kurven oder Punktverläufen in der Regel als numerischen Wert aus. Der zu untersuchende Dosierungsvorgang kann beispielsweise dann als fehlerhaft beurteilt werden, wenn der ermittelte Übereinstimmungsgrad außerhalb eines vorbestimmten Übereinstimmungsgrad-Sollwertebereichs liegt. Durch diesen Vergleich eines numerischen Wertes mit einem vorbestimmten Wertebereich kann das Beurteilungsergebnis besonders schnell erhalten werden, was angesichts der bei industriellen Dosierungsvorgängen kurzen zur Verfügung stehenden Zeiten von großer Wichtigkeit ist.

Weiterhin kann ein auftretender Fehler, der dann vorliegt, wenn der Über einstimmungsgrad als außerhalb des vorbestimmten Übereinstimmungsgrad-Sollwertebereichs liegend erfasst wird, durch ein weiterführendes Diagnose-Vergleichsverfahren näher untersucht werden. Insbesondere wird hierbei ermittelt, ob der Übereinstimmungsgrad in einem Fehlerbereich aus einer Mehrzahl von Fehlerbereichen eines außerhalb des Übereinstimmungsgrad-Sollwertebereichs liegenden Übereinstimmungsgrad-Wertebereichs liegt. In Abhängigkeit von dem Fehlerbereich, in dem der Übereinstimmungsgrad liegt, wird dann eine Fehlermeldung ausgegeben. Dadurch ist es möglich, einen systematischen Fehler an der Dosieranlage schnell und zuverlässig zu erkennen und zu beheben. Dazu können beispielsweise in Versuchen Fehlerbereiche innerhalb des gesamten Übereinstimmungsgrad-Wertebereichs ermittelt und diesen bestimmte Fehler bzw. Fehlergruppen zugeordnet werden, wodurch unter Umständen eine Aussage darüber möglich ist, wie kritisch der jeweilige Fehler ist.

Um weitere Rechenzeit und weiteren Speicherplatz einsparen zu können reicht es aus, wenn das Korrelationsrechenverfahren als Eingangsgröße Stützpunkte aus dem zeitlichen Verlauf der wenigstens einen Zustandsgröße und aus der Referenzkurve verwendet. Bei ausreichend geringem Abstand zwischen den Stütpunkten kann die Rechenzeit und der benötigte Speicherplatz erheblich reduziert werden, ohne dass Genauigkeit im Beurteilungsergebnis eingebüßt wird.

Nach einem weiteren Gesichtspunkt der Erfindung wird die vorstehende Aufgabe ebenfalls gelöst durch eine Vorrichtung gemäß Anspruch 14.

Die Erfassung des zeitlichen Verlaufs der wenigstens einen Zustandsgröße kann kontinuierlich oder in in einem zeitlichen Abstand voneinander erfolgender Einzelmessungen erfolgen, wobei der Abstand zwischen zwei Einzelmessungen im Vergleich zur Gesamtdauer des Flüssigkeitsdosierungsvorgangs klein ist.

Im Datenspeicher ist der vorbestimmte Zustandsgrößen-Sollwertebereich gespeichert. Weiterhin werden die vom Sensor erfassten Zustandsgrößenwerte im Datenspeicher abgelegt.

Aus einer Mehrzahl von Einzelmessungen kann beispielsweise dadurch ein zeitlicher Verlauf gebildet werden, dass man jeder Messung einen für den Dosierungsvorgang charakteristischen Maschinen- oder Gefäßzustand, beispielsweise die Stellung eines beweglichen Kolbens relativ zum übrigen Gefäß, zuordnet. Die Stellung des Kolbens ist zumindest während der Phase, in der der Kolben bewegt wird, einem Zeitpunkt äquivalent.

Die Vorrichtung kann auch eine Uhr umfassen. Gewünschtenfalls können dann, alternativ oder zusätzlich zu den vorgenannten Maschinenzuständen, auch die einer Zustandsgrößenerfassung zugeordneten Zeitpunkte selbst gespeichert werden. Eine Speicherung von Zustandsgrößen zusammen mit den ihnen zugeordneten Erfassungszeitpunkten oder diesen äquivalenten Maschinenzuständen ist beispielsweise nötig, wenn die Erfassung von Zustandsgrößenwerten durch wenigstens einen Sensor nicht in konstanten Zeitabständen erfolgt. Werden Zustandsgrößenwerte dagegen in konstanten Zeitabständen erfasst, so kann die Speicherung von Erfassungszeitpunkten entfallen, da der Erfassungszeitpunkt aus der Reihenfolgeposition eines Zustandsgrößenwerts in einer Reihe von Zustandsgrößenwerten bestimmbar ist.

Weiterhin umfasst die Vorrichtung eine Datenverarbeitungseinheit, welche gemäß Anspruch 14 ausgebildet ist.

Eine Ausgabeeinheit dient schließlich zur Ausgabe eines Beurteilungsergebnisses, welches in Abhängigkeit von dem Ermittlungsergebnis durch die Datenverarbeitungseinheit erhalten wird. Die Ausgabeeinheit kann alphanumerische Zeichen oder/und graphische Elemente, wie z. B. farbige oder/und strukturierte Linien oder/und Flächen, zur Ausgabe des Beurteilungsergebnisses und, falls gewünscht, zur Darstellung des zeitlichen Verlaufs der Zustandsgröße sowie des Zustandsgrößen-Sollwertebereichs verwenden.

Zusätzlich zum Zustandsgrößen-Sollwertebereich kann in dem Datenspeicher weiterhin eine Mehrzahl von vorbestimmten Fehlerbereichen gespeichert sein, wobei jedem Fehlerbereich wenigstens ein möglicher Fehler des Dosierungsvorgangs zugeordnet ist. Dadurch kann die Datenverarbeitungseinheit den oder die in Frage kommenden Fehler des Dosierungsvorgangs diagnostizieren.

Weiterhin kann die Vorrichtung zur Erstellung des Zustandsgrößen-Sollbereichs eine Editiereinheit umfassen, durch die beispielsweise ausgehend von einer Schar von zeitlichen Verläufen von Zustandsgrößen ein Zustandsgrößen-Sollwertebereich erstellt werden kann.

Die Editiereinheit kann dazu eine mit ihr verbundene Eingabeeinheit umfassen. Über diese Eingabeeinheit können beispielsweise Zahlenwerte eingegeben werden, welche Toleranzbereiche definieren, um die eine Einhüllende der Schar von zeitlichen Verläufen gegenüber der Schar verbreitert oder verengt wird.

Alternativ oder zusätzlich dazu kann die Ausgabeeinheit der Vorrichtung eine graphische Ausgabeeinheit sein, wobei dann über die Eingabeeinheit ein Zustandsgrößen-Sollwertebereich auch graphisch festgelegt werden kann. Dieses graphische Verfahren, bei dem beispielsweise die Schar von zeitlichen Verläufen der Zustandsgröße und ein Zustandsgrößen-Sollwertebereich gemeinsam sichtbar dargestellt werden, stellt eine besonders einfache, aber dennoch sehr wirkungsvolle Möglichkeit dar, einen Zustandsgrößen-Sollwertebereich zu erstellen. Mit der Editiereinheit kann jedoch auch auf graphischem Wege aus der Schar von zeitlichen Verläufen ein Referenzverlauf bzw. eine Referenzkurve erstellt werden. Mit größerer Genauigkeit kann dies jedoch durch Rechenverfahren geschehen.

Entsprechend den zuvor dargestellten bevorzugten Ausführungsformen des erfindungsgemäßen Verfahrens kann die Datenverarbeitungseinheit ermitteln, ob der zeitliche Verlauf der wenigstens einen Zustandsgröße innerhalb des vorbestimmten Zustands-Sollwertebereichs liegt.

Gemäß einem weiteren Gesichtspunkt der vorliegenden Erfindung wird die vorstehend genannte Aufgabe auch durch eine Vorrichtung gemäß Anspruch 19 gelöst, bei welcher insbesondere die Datenverarbeitungseinheit dazu ausgebildet ist, ein Korrelationsrechenverfahren zur Ermittlung eines Übereinstimmungsgrades des zeitlichen Verlaufs der wenigstens einen Zustandsgröße mit einer vorbestimmten Referenzkurve als Zustandsgrößen-Sollwertebereich durchzuführen. Dann ist es vorteilhaft, wenn in dem Datenspeicher ein vorbestimmter Übereinstimmungsgrad-Sollwertebereich gespeichert ist, mit dem der ermittelte Übereinstimmungsgrad verglichen werden kann. So kann ermittelt werden, ob der ermittelte Übereinstimmungsgrad innerhalb des vorbestimmten Übereinstimmungsgrad-Sollwertebereichs liegt.

Die zuvor angesprochenen Fehlerbereiche, die in dem Datenspeicher zur Fehlerdiagnose hinterlegt sein können, können beispielsweise Übereinstimmungsgrad-Wertebereiche sein. Dann ist einem bestimmten Bereich von Übereinstimmungsgrad-Werten ein bestimmter Fehler bzw. eine bestimmte Fehlergruppe zugeordnet.

Es sei an dieser Stelle ausdrücklich darauf verwiesen, dass die beiden genannten bevorzugten Ausführungsformen zur Erhöhung der Beurteilungssicherheit auch kombiniert auf ein und denselben Dosierungsvorgang angewendet werden können.

Wie bereits gesagt wurde, kann das erfindungsgemäße Verfahren zur Beurteilung eines Flüssigkeitsdosierungsvorgangs mit beliebigen Flüssigkeiten sowie in einer beliebigen Gasatmosphäre angewandt werden. Gleiches gilt für die oben beschriebenen Vorrichtungen.

Es ist dabei denkbar, dass das Verfahren bzw. die Vorrichtung neben einer bloßen Beurteilung im Falle einer als fehlerhaft beurteilten Dosierung auch Maßnahmen veranlasst bzw. durchführt. Dazu zählt beispielsweise das Anhalten eines bestimmten Dosierungsvorgangs das Auswechseln bestimmter Pipettierspitzen, das Verwerfen eines Dosiervorgangs z. B. Aspiration und Wiederholung dieses Dosiervorgangs.

Im Folgenden wird die vorliegende Erfindung anhand der beiliegenden Zeichnungen näher erläutert. Es stellen dar:
- Fig. 1a-1e: Phasen eines Aspirationsvorgangs beim Pipettieren,
- Fig. 2: ein Verfahren zur Beurteilung eines Flüssigkeitsdosierungsvorgangs nach dem Stand der Technik,
- Fig. 3: eine graphische Darstellung eines zeitlichen Verlaufs des Drucks eines im Flüssigkeitsaufnahmeraum einer Pipettierspitze vorhandenen Gases bei einem Aspirations- und einem Dispensationsvorgang, ein Zustandsgrößen-Sollwertebereich gemäß der ersten bevorzugten Ausführungsform der Erfindung sowie den Sollwertebereich umgebende Fehlerbereiche,
- Fig. 4: ein Flussdiagramm, das die erste bevorzugte Ausführungsform des erfindungsgemäßen Verfahrens beschreibt,
- Fig. 5: ein Diagramm das das Zustandekommen von Zustandsgrößen-Sollwertebereichen der bevorzugten Ausführungsformen der vorliegenden Erfindung darstellt.

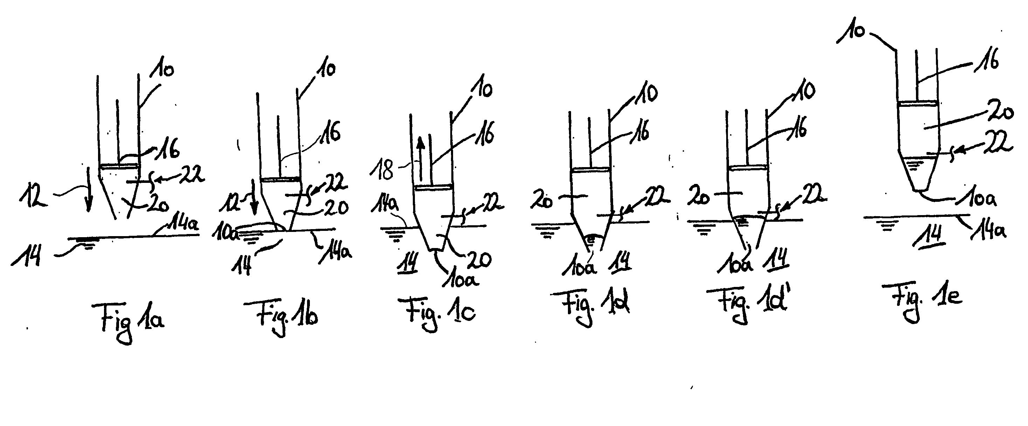

Anhand der Fig. 1a bis 1e wird kurz anhand von schematischen Darstellungen ein dem Ausführungsbeispiel der vorliegenden Erfindung zugrundeliegender Aspirationsvorgang einer Flüssigkeit beim Pipettieren erläutert.

Fig. 1a zeigt einen schematischen Querschnitt einer Pipettierspitze 10, welche in Richtung des Pfeils 12 auf den Flüssigkeitsspiegel 14a einer Flüssigkeit 14 zu bewegt wird. Im Flüssigkeitsaufnahmeraum ist ein Druckerfassungssensor 22 angeordnet, der den Druck des im Flüssigkeitsaufnahmeraum 20 vorhandenen Gases erfasst.

In Fig. 1b hat die Öffnung 10a der Pipettierspitze 10 den Flüssigkeitsspiegel 14a erreicht. Dadurch wird die im Flüssigkeitsaufnahmeraum 20 der Pipettierspitze 10 vorhandene Gasmenge von der Umgebungsluft abgetrennt und bleibt abgesehen von Verdampfungs- und Kondensationsvorgängen im Wesentlichen konstant. Die Pipettierspitze 10 wird weiterhin in Richtung des Pfeils 12 abgesenkt.

In Fig. 1 c hat die Pipettierspitze 10 ihren Absenkpunkt erreicht und verharrt mit der Öffnung 10a in der Flüssigkeit 14 eingetaucht. Der Kolben 16 wird jetzt in Richtung des Pfeils 18 bewegt. Aufgrund von Reibungs- und Oberflächenspannungseffekten ist noch keine Flüssigkeit in den Flüssigkeitsaufnahmeraum 20 eingeströmt.

In Fig. 1d ist zu sehen, dass die Aufnahme von Flüssigkeit 14 durch die Pipettierspitze 10 durch die Öffnung 10a hindurch bereits begonnen hat. Dann wird der Kolben 16 nicht mehr weiter bewegt (Fig. 1 d'), so dass das Volumen des Flüssigkeitsaufnahmeraums 20 der Pipettierspitze 10 nicht weiter vergrößert wird. Aufgrund des im Flüssigkeitsaufnahmeraum 20 vorhandenen Unterdrucks bezüglich der Umgebung strömt jedoch weiterhin Flüssigkeit 14 in den Flüssigkeitsaufnahmeraum 20 nach, bis sich ein Gleichgewicht eingestellt hat.

In Fig. 1e ist der Aspirationsvorgang beendet. Die Pipettierspitze 10 wurde aus der Flüssigkeit 14 abgehoben. Im Flüssigkeitsaufnahmeraum 20 der Pipettierspitze 10 befindet sich ein bestimmtes Volumen der Flüssigkeit 14, welches dort durch den Unterdruck des zwischen Kolben 16 und dem Flüssigkeitsvolumen eingeschlossenen Gases bezüglich der Umgebung gehalten wird. Darüber hinaus tragen auch Reibungs- und Adhäsionseffekte zwischen dem Flüssigkeitsvolumen und der Wand der Pipettierspitze 10 dazu bei, dass das Flüssigkeitsvolumen in der Pipettierspitze 10 verbleibt.

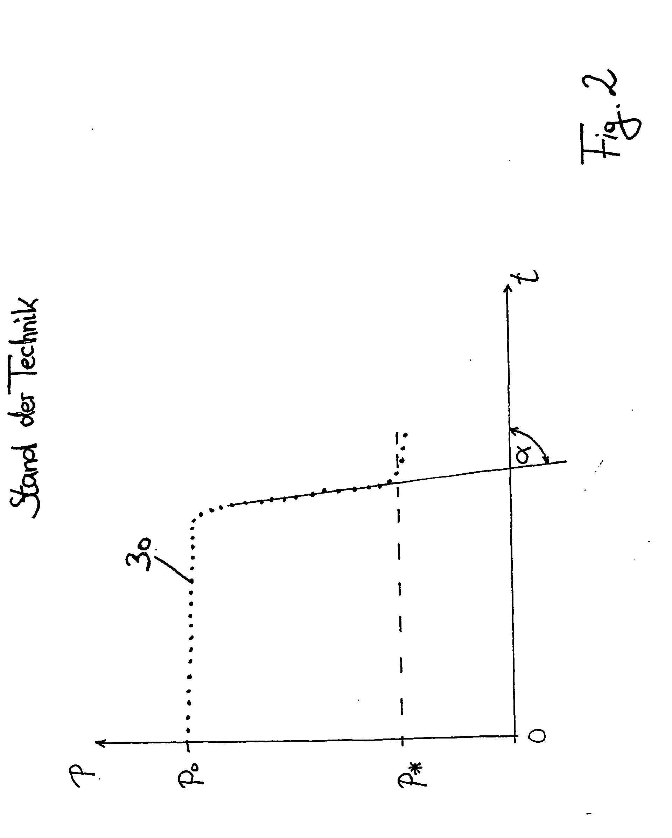

In Fig. 2 ist ein Druck-Zeit-Diagramm eines Verfahrens nach dem Stand der Technik zur Beurteilung eines Flüssigkeitsdosierungsvorgangs mit 30 bezeichnet. An der Abszisse des in Fig. 2 dargestellten Diagramms ist die Zeit t und an der Ordinate der Druck p der im Flüssigkeitsaufnahmeraum 20 vorhandenen Gasmenge aufgetragen.

Eine Beurteilung des Flüssigkeitsdosierungsvorgangs erfolgt derart, dass ermittelt wird, ob der Druck-Zeit-Verlauf zumindest abschnittsweise eine Steigung α erreicht, d. h. ob die Gasdruckänderungsgeschwindigkeit zumindest in einem Abschnitt einen vorbestimmten, zu tan α proportionalen Wert erreicht oder/und ob der Druck im Flüssigkeitsaufnahmeraum der Pipettierspitze bei der Aspiration einen vorbestimmten Grenzwert p. unterschreitet. Wird von dem Druck-Zeit-Diagramm in einem dem Aspirationsbeginn nahen Zeitraum die Steigung α erreicht oder/und der Grenzwert p. unterschritten, wird der Aspirationsvorgang als fehlerfrei beurteilt. Wird eine der vorgenannten Bedingungen nicht erfüllt, so wird der Aspirationsvorgang als fehlerhaft beurteilt.

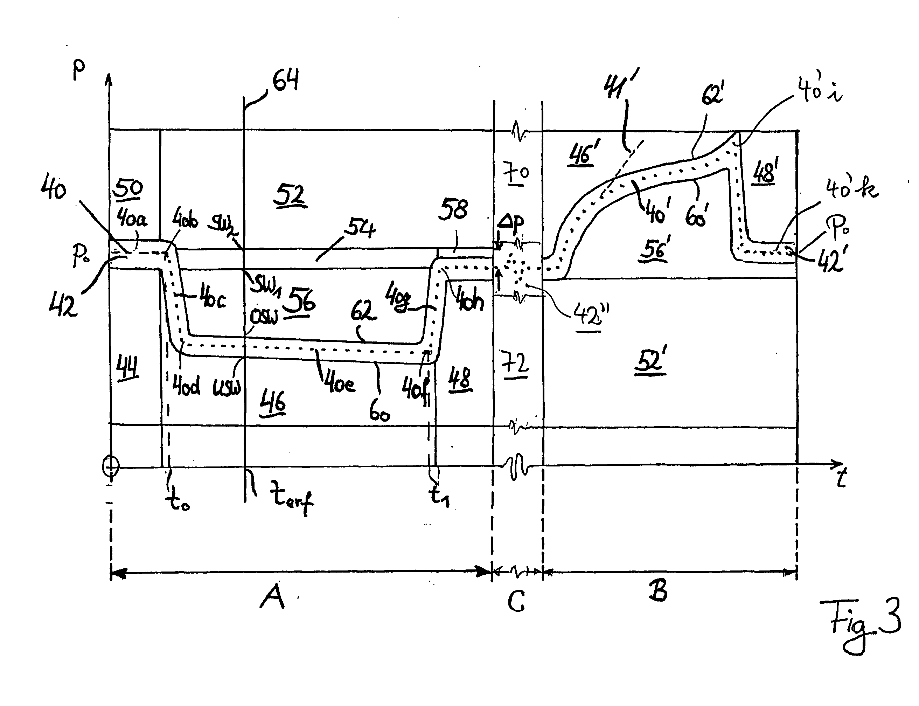

In Fig. 3 ist im Zeitbereich A der mit dem Druckerfassungssensor 22 der Fig. 1a bis 1 e während eines Aspirationsvorgangs erfasste Gasdruck im Flüssigkeitsaufnahmeraum 20 der Pipettierspitze 10 durch die gepunktete Linie 40 dargestellt. Dieser zeitliche Verlauf des Drucks ist in einem Koordinatensystem aufgetragen. Auf der Abszisse ist die Zeit t aufgetragen und auf der Ordinate der Druck p des Gases im Flüssigkeitsaufnahmeraum 20.

In diesem Koordinatensystem ist weiterhin ein einer Sollkurve folgender Druck-Sollwertebereich 42 aufgetragen. Außerhalb des Druck-Sollwertebereichs 42 liegen in diesem Diagramm die unterhalb des Druck-Sollwertebereichs 42 liegenden Fehlerbereiche 44, 46 und 48 sowie die oberhalb des Druck-Sollwertebereichs 42, d. h. zu höheren Drücken hin liegenden, Fehlerbereiche 50, 52, 54, 56 und 58.

In Fig. 3, Zeitbereich A, liegt der zeitliche Verlauf 40 des Gasdrucks im gesamten Definitionsbereich des Druck-Sollwertebereichs 42 innerhalb desselben, weshalb der betrachtete Dosierungsvorgang als fehlerfrei beurteilt wird.

Zum besseren Verständnis des zeitlichen Verlaufs 40 des Gasdrucks im Flüssigkeitsaufnahmeraum 20 der Pipettierspitze 10 von Fig. 1a bis 1e wird im Folgenden kurz erläutert:

Der Verlauf beginnt zum Zeitpunkt t=0 beim Umgebungsdruck p₀. In dem ersten Abschnitt 40a bleibt der Druck konstant. Dies entspricht dem in Fig. 1a gezeigten Zustand, bei weichem das Volumen des Flüssigkeitsaufnahmeraums 20 konstant bleibt. Sobald die Öffnung 10a der Pipettierspitze 10, wie in Fig. 1 b gezeigt, den Flüssigkeitsspiegel 14a erreicht, ergibt sich momentan zuerst eine geringfügige Druckerniedrigung auf Grund von Adhäsion bei der Berührung der Flüssigkeitsoberfläche, die dann vom wachsenden Staudruck in der zunehmend eintauchenden Pipettierspitze überlagert wird. Beide Effekte sind vergleichsweise klein und sind daher nicht in Fig. 3 eingetragen.

Zu einem Zeitpunkt, der der Fig. 1c entspricht, wird der Kolben 16 in Richtung des Pfeils 18 mit konstanter Geschwindigkeit nach oben bewegt, mit der Folge, dass der Druck drastisch abfällt. Diese durch den Abschnitt 40c dargestellte Phase des starken Druckabfalls endet am Punkt 40d, an welchem Flüssigkeit beginnt, in den Flüssigkeitsraum 20 der Pipettierspitze einzuströmen. In dem an den Punkt 40d anschließenden Bereich 40e wird eine weitere, durch Bewegung des Kolbens 16 verursachte Vergrößerung des Gasvolumens der im Flüssigkeitsaufnahmeraum 20 eingeschlossenen Gasmenge durch die in den Flüssigkeitsaufnahmeraum 20 einströmende Flüssigkeit verringert, d. h. dem sich anhebenden Kolben folgt eine Flüssigkeitsgrenzfläche. Es stellt sich näherungsweise ein dynamisches Gleichgewicht zwischen durch den Kolben verursachter Gasvolumenvergrößerung und durch die einströmende Flüssigkeit verursachter Gasvolumenverringerung ein.

Die Bewegung des Kolbens und damit die Vergrößerung des Volumens des Flüssigkeitsaufnahmeraums endet zum Zeitpunkt t₁ am Punkt 40f (Fig. 1 d). Der im Flüssigkeitsaufnahmeraum 20 noch vorhandene Unterdruck des Gases bezüglich des Umgebungsgases der Pipettenspitze 10 lässt weiterhin Flüssigkeit in den Flüssigkeitsaufnahmeraum 20 nachströmen, wodurch sich, wie im Abschnitt 40g dargestellt, das Volumen der in dem Flüssigkeitsaufnahmeraum eingeschlossenen Gasmenge schnell verringert und ihr Druck entsprechend schnell ansteigt..

Im Punkt 40h ist die Pipettierspitze 10 bereits von der Flüssigkeit abgehoben (Fig. 1 e). Kurz vorher endet das Einströmen der Flüssigkeit in den Flussigkeitsaufnahmeraum 20 der Pipettierspitze 10 (Fig. 1d'), Im Punkt 40h steht die zwischen Kolben 16 und der Flüssigkeit im Flüssigkeitsaufnahmeraum 20 eingeschlossene Gasmenge unter einer negativen Druckdifferenz Δp, welche für ausreichend groß dosierte Flüssigkeitsmengen zur dosierten Flüssigkeitsmenge näherungsweise proportional ist. Bei sehr geringen Flüssigkeitsmengen, d. h. je nach Flüssigkeit bei Mengen kleiner als etwa 30 µl, wirken sich Reibungs- und Adhäsionseffekte zwischen Flüssigkeit und Wand der Pipettenspitze so stark aus, dass keine direkte Proportionalität zwischen der negativen Druckdifferenz und der dosierten Flüssigkeitsmenge besteht.

Die einzelnen Fehlerbereiche 44, 46, 48, 50, 52, 54, 56 und 58 sind untereinander zeitlich und durch Druckwerte bzw. zeitliche Druckwertverläufe abgegrenzt. Der Druck-Sollwertebereich 40 ist zu niedrigeren Drücken hin durch die untere Schwellenkurve 60 und zu höheren Drücken hin durch die obere Schwellenkurve 62 begrenzt. Die untere und die obere Schwellenkurve 60, 62 sind Funktionen des Druckes in Abhängigkeit von der Zeit und könnend individuell festgelegt werden. Dabei können den unterschiedlichen Fehlerbereichen beispielsweise folgende Fehler zugeordnet sein:
- Fehlerbereich 44:: defekte Druckmessung
- Fehlerbereich 46:: Pipettieröffnung verstopft,
- Fehlerbereich 48:: zu lange Aspirationszeit,
- Fehlerbereich 50:: defekte Druckmessung
- Fehlerbereich 52:: Aspiration und Dispensation verwechselt und Pipettieröffnung ist verstopft,
- Fehlerbereich 54:: Pipettierspitze ist undicht,
- Fehlerbereich 56:: Aspirationsvorgang unterbrochen oder Luftblasen in der Flüssigkeit,
- Fehlerbereich 58:: zu wenig oder keine Flüssigkeit in der Pipettierspitze.

Im Zeitbereich B von Fig. 3 sind der zeitliche Verlauf des Gasdrucks, der Druck-Sollwertebereich sowie den Druck-Sollwertebereich umgebende Fehlerbereiche beim Dispensationsvorgang dargestellt. Der Dispensationsvorgang kann beispielsweise an den zuvor beschriebenen Aspirationsvorgang anschließend ablaufen resp. anschließend an einen dazwischenliegenden Transportvorgang (Zeitbereich C). Gleiche Elemente wie im Zeitabschnitt A des Aspirationsvorgangs sind im Zeitabschnitt B des Dispensationsvorgangs mit gleichen, jedoch apostrophierten Bezugszeichen versehen. Die Fehlerbereiche im Zeitabschnitt B sind dabei derart numeriert, dass die Bereiche mit entsprechender Fehlerzuordnung mit dem gleichen, jedoch apostrophierten Bezugszeichen bezeichnet sind. Mit 40'i ist der Druck zum Zeitpunkt des letzten Flüssigkeitstropfens bezeichnet und mit 40'k der Gleichgewichtsdruck, der sich nach Stillstand des Kolbens einstellt und der dem Umgebungsdruck P₀ entspringt.

Es gilt dabei die folgende Zuordnung von Fehlermeldungen und Fehlerbereichen:
- Fehlerbereich 46':: Pipettieröffnung verstopft,
- Fehlerbereich 48':: Dispensationszeit zu lang,
- Fehlerbereich 52':: Aspiration und Dispensation verwechselt,
- Fehlerbereich 56':: Pipettierspitze oder Pipettiersystem ist undicht.

Die Verwendung der Fehlerbereiche ist dabei wie folgt zu verstehen: Wenn beispielsweise bei einer Dispensation die Pipettieröffnung verstopft ist, kann die in der Pipettierspitze vorhandene Flüssigkeit nicht oder nur eingeschränkt aus der Pipettierspitze austreten. Aufgrund der Ausschiebe-Bewegung des Kolbens beim Dispensieren, durch welche das Volumen des Flüssigkeitsaufnahmeraums der Pipettenspitze verringert wird, wird das in der Pipettenspitze eingeschlossene Gasvolumen komprimiert. Dadurch steigt der Gasdruck an. Dies führt dazu, dass der zeitliche Verlauf des Drucks den Sollwertebereich 42' unter Überschreitung seines oberen Schwellenwertes 62' verlässt und dabei in den Fehlerbereich 46' eintritt. Dies ist durch die gestrichelte Linie 41' im Zeitabschnitt B in Fig. 3 dargestellt. Auf diese Art und Weise kann nicht nur zuverlässig erkannt werden, dass während des Flüssigkeitsdosierungsvorgangs ein Fehler aufgetreten ist, sondern der Fehler kann zusätzlich diagnostiziert werden.

Auch im zwischenzeitlichen Zeitbereich kann eine Drucküberwachung stattfinden mit einem nach oben und nach unten etwas vergrößerten zulässigen Druck-Sollwertebereich 42'' zur Brücksichtigung von zulässigen Druckschwankungen beim Transport insbesondere bei ruckartiger Bewegung. Überschreitet der Druck den Sollwertebereich (Fehlerbereich 70) oder unterschreitet er den Sollwertebereich (Fehlerbereich 72), wird ein Fehler festgestellt.

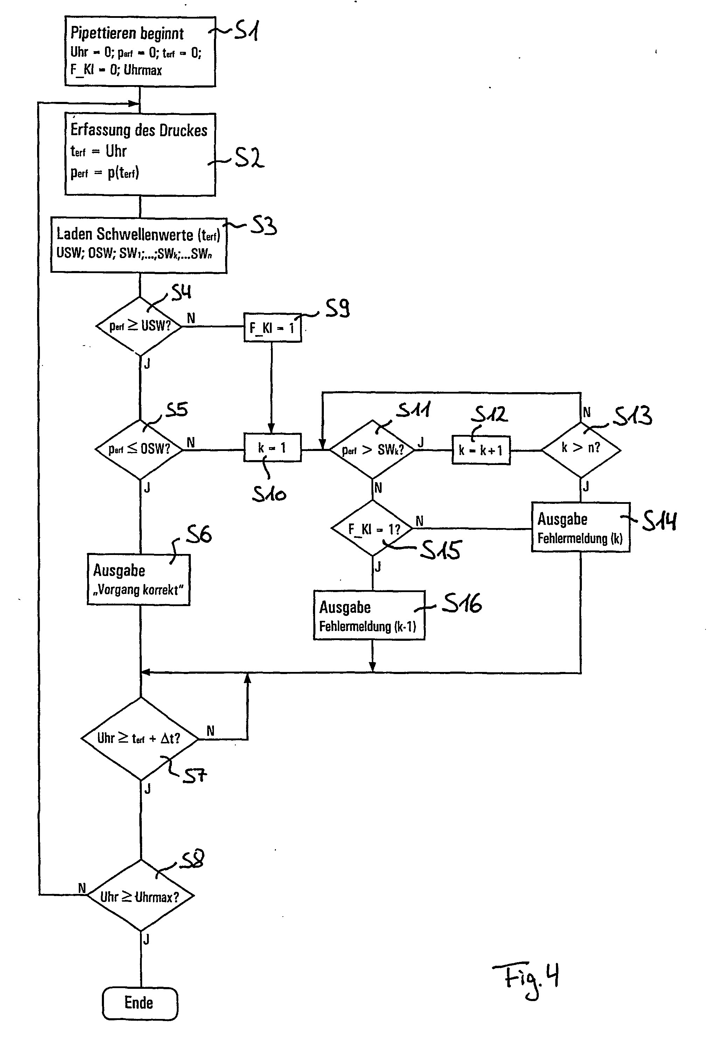

In Fig. 4 ist in einem Flussdiagramm der Ablauf einer Beurteilung eines Flüssigkeitsdosierungsvorgangs dargestellt. Bei Schritt S1 beginnt der Pipettiervorgang, beispielsweise der aus dem Zeitabschnitt A von Fig. 3 bekannte Aspirationsvorgang. Bei Beginn des Flüssigkeitsdosierungsvorgangs werden die für den Ablauf relevanten Parameter initialisiert, d. h. eine Uhr wird auf Null gesetzt und gestartet, der von einem Druckerfassungssensor zu einem Erfassungszeitpunkt t_{erf} erfasste Druck p_{erf} wird auf Null gesetzt, ebenso der Erfassungszeitpunkt t_{erf}. Weiterhin wird ein Flag F_Kl, welcher im Fehlerfalle anzeigt, ob der Druck-Sollwertebereich zu höheren oder zu niedrigeren Druckwerten hin verlassen wurde, auf Null gesetzt. Der Wert Uhrmax, der die Dauer des Flüssigkeitsdosierungsvorgangs angibt, wird geladen.

Im nächsten Schritt S2 wird der Druck des im Flüssigkeitsaufnahmeraum vorhandenen Gases erfasst und der aktuelle Wert der Uhr in die Variable t_{erf} des Erfassungszeitpunkts geladen. Der zum Zeitpunkt t_{erf} gemessene Druck p wird in die Variable p_{erf} geladen, d. h. die Druckerfassung wurde zum Zeitpunkt t_{erf} ausgeführt.

Im folgenden Schritt S3 werden aus einem Speicher die dem jeweiligen Erfassungszeitpunkt t_{erf} zugeordneten Schwellenwerte geladen. Dabei bezeichnet USW den unteren Schwellenwert des Druck-Sollwertebereichs (d. h. den Wert der unteren Schwellenkurve 60 zum Zeitpunkt t_{erf} von Fig. 3), OSW den oberen Schwellenwert. SW₁ bis SWₙ bezeichnet die Schwellenwerte, die die einzelnen vorhandenen Fehlerbereiche voneinander trennen. Wird beispielsweise die Druckerfassung zu dem in Fig. 3 durch Linie 64 gekennzeichneten Zeitpunkt t_{erf} durchgeführt, so ist Punkt SW₁ der den Fehlerbereich 56 vom Fehlerbereich 54 trennende Schwellenwert und der Punkt SW₂ ist der den Fehlerbereich 54 vom Fehlerbereich 52 trennende Schwellenwert. Der Wert n gibt dabei die maximale Anzahl von zwischen zwei Fehlerbereichen liegenden Schwellenwerten an. In dem in Fig. 3 dargestellten Beispiel ist n = 2.

Im nächsten Schritt S4 wird überprüft, ob der erfasste Druck p_{erf} gleich oder größer als der den Druck-Sollwertebereich zu kleineren Druckwerten hin begrenzenden untere Schwellenwert USW ist. Ist dies der Fall, wird im nachfolgenden Schritt S5 überprüft, ob der erfasste Druck p_{erf} kleiner oder gleich groß wie der den Druck-Sollwertebereich zu größeren Druckwerten hin begrenzende obere Schwellenwert OSW ist. Ist auch dies der Fall, so wird in einem nachfolgenden Schritt S6 ausgegeben, dass der Vorgang korrekt abläuft.

Schritt S7 stellt eine Warteschleife dar, die eine weitere Druckerfassung erst dann ermöglicht, wenn seit der letzten Druckerfassung die Zeitspanne Δt verstrichen ist.

Im Schritt S8 wird überprüft, ob die Zeitgrenze Uhrmax für den Dosierungsvorgang erreicht ist oder nicht. Falls die Zeitgrenze erreicht ist, endet der Ablauf, falls nicht, kehrt der Ablauf zu Schritt S2 und somit zu einer erneuten Erfassung des Gasdrucks im Flüssigkeitsaufnahmeraum der Pipettierspitze zurück.

Falls im Schritt S4 ermittelt wird, dass der erfasste Druck p_{erf} kleiner als der untere Schwellenwert USW ist, d. h. der zeitliche Verlauf des Gasdrucks verlässt den Druck-Sollwertebereich zu niedrigeren Druckwerten hin, so wird in einem Schritt S9 der Flag F_KI auf den Wert 1 gesetzt. Im nachfolgenden Schritt S10 wird die Laufvariabie k=1 gesetzt. Falls der zeitliche Verlauf des Druckwerts den Druck-Sollwertebereich zu höheren Druckwerten hin verlässt, d. h. falls im Schritt S5 ermittelt wird, dass der erfasste Druck p_{erf} größer als der obere Schwellenwert OSW ist, wird ebenfalls Schritt S10 erreicht, jedoch verbleibt der Flag F_Kl auf seinem Initialisierungswert Null.

Nachdem bereits ermittelt wurde, dass im Flüssigkeitsdosierungsverfahren ein Fehler aufgetreten ist, wird dieser in den im Folgenden beschriebenen Schritten diagnostiziert. Dabei gilt folgende Konvention: Jedem Fehlerbereich ist wenigstens eine Fehlermeldung zugeordnet. Die Fehlermeldungen sind als eindimensionales Feld (= Vektor) definiert, wobei die einzelnen Einträge Fehlermeldung (x) im Fehlermeldungsfeld den Fehlerbereichen in Richtung ansteigenden Drucks zugeordnet sind, d. h. Fehlermeldung (O) ist Fehlerbereich 46, Fehlermeldung (1) ist Fehlerbereich 56, Fehlermeldung (2) ist Fehlerbereich 54 und Fehlermeldung (3) ist Fehlerbereich 52 zugeordnet. Dementsprechend enthält das eindimensionale Fehlermeldungsfeld in Abhängigkeit der Anzahl von zu einem bestimmten Zeitpunkt vorhandenen Fehlerbereichen unterschiedlich viele Einträge.

Im Schritt S11 wird nun ermittelt, ob der erfasste Druck p_{erf} größer als der k-te Schwellenwert ist. Ist dies der Fall, wird im Schritt S12 die Laufvariable k um eins erhöht und in Schritt S13 wird überprüft, ob k bereits die maximale Anzahl n von dem Zeitpunkt t_{erf} zugeordneten Schwellenwerten übersteigt oder nicht. Übersteigt k die Anzahl n noch nicht, so wird die Überprüfung des Schritts S11 erneut, jedoch mit einer um eins erhöhten Laufvariable durchgeführt.

Übersteigt k nach der Erhöhung um eins jedoch den Wert n, so muss der überprüfte Druckwert in dem Fehlerbereich mit dem höchsten Druckwertebereich liegen und es wird in Schritt S14 die Fehlermeldung (k), d. h. im vorliegenden Beispiel Fehlermeldung (3) von Fehlerbereich 52, ausgegeben.

Ergibt die Überprüfung in Schritt S11, dass der erfasste Druck p_{erf} den Schwellenwert SW_{K} nicht übersteigt, so wird in Schritt S15 überprüft, ob der Flag F_KI den Wert 1 besitzt, d. h. ob der zeitliche Verlauf des Drucks zu höheren oder zu niedrigen Druckwerten hin aus dem Druck-Sollwertebereich ausgebrochen ist. Weist der Flag F_KI den Wert Null auf, d. h. wurde der Druck-Sollwertebereich zu höheren Druckwerten hin verlassen, so wird die Fehlermeldung (k) ausgegeben. Ergibt die Überprüfung des Schritts S15 jedoch, dass der Wert des Flags F_KI den Wert 1 aufweist, d. h. der zeitliche Verlauf des Drucks den Druck-Sollwertebereich zu niedrigeren Druckwerten hin verlassen hat, so wird in Schritt S16 die Fehlermeldung (k-1) ausgegeben. Nach der Ausgabe der Fehlermeldung springt der Ablauf in diesem Beispiel zur Warteschleife des Schritts S7. Es ist jedoch auch möglich, dass sich an die Ausgabe einer Fehlermeldung eine andere Prozedur anschließt, beispielsweise ein Not-Aus einer Pipettieranlage oder ein Auswechseln einer Pipettierspitze. Häufig ist es jedoch interessant, auch bei einem fehlerhaften Dosierungsvorgang den zeitlichen Verlauf der erfassten Zustandsgröße bis zum Ende des Dosierungsvorgangs zu überwachen, da der zeitliche Verlauf der wenigstens einen Zustandsgröße unter Umständen mehrere Fehlerbereiche erreichen kann.

Die Vorrichtung, in der das erfindungsgemäße Verfahren abläuft, kann beispielsweise eine elektronische Datenverarbeitungsanlage, insbesondere ein Personalcomputer oder prozess-steuernde Microcontroller sein. Diese Datenverarbeitungsanlage ist mit wenigstens einem Sensor an der Pipettierspitze verbunden, um den zeitlichen Verlauf wenigstens einer Zustandsgröße, beispielsweise des Drucks, zu erfassen. Der Datenspeicher kann eine Festplatte, eine CD-ROM, ein rechenanlageninterner RAM-Speicher oder ein Speicher eine smit dem Microcontroller verbundenen PC sein. Beispielsweise kann der Zustandsgrößen-Sollwertebereich auf einer CD-ROM gespeichert sein. Die CPU der Datenverarbeitungsanlage bildet die Datenverarbeitungseinheit, und ein Bildschirm oder ein Drucker stellt die Ausgabeeinheit der Vorrichtung dar. Die CPU kann weiterhin eine Editiereinheit bilden, wobei die Datenverarbeitungsanlage dann zur Durchführung einer Editierung des Zustandsgrößen-Sollwertebereichs eine Tastatur oder eine Maus oder dergleichen als Eingabeeinheit umfasst.

Die Auswertung der den Dosiervorgang begleitenden Zustandgrößenmessung kann beispielsweise entsprechend dem vorstehend beschriebenen Flußdiagramm erfolgen, in dem ein zahlenmäßiges Austreten des momentanen Meßwertes aus dem Toleranzbereich erfaßt wird. Denkbar ist auch eine graphische Auswertung (z. B. Pattern-Recognition-Technik) zur Feststellung ob und wo das Toleranzband von der aktuellen Meßkurve verlassen wird.

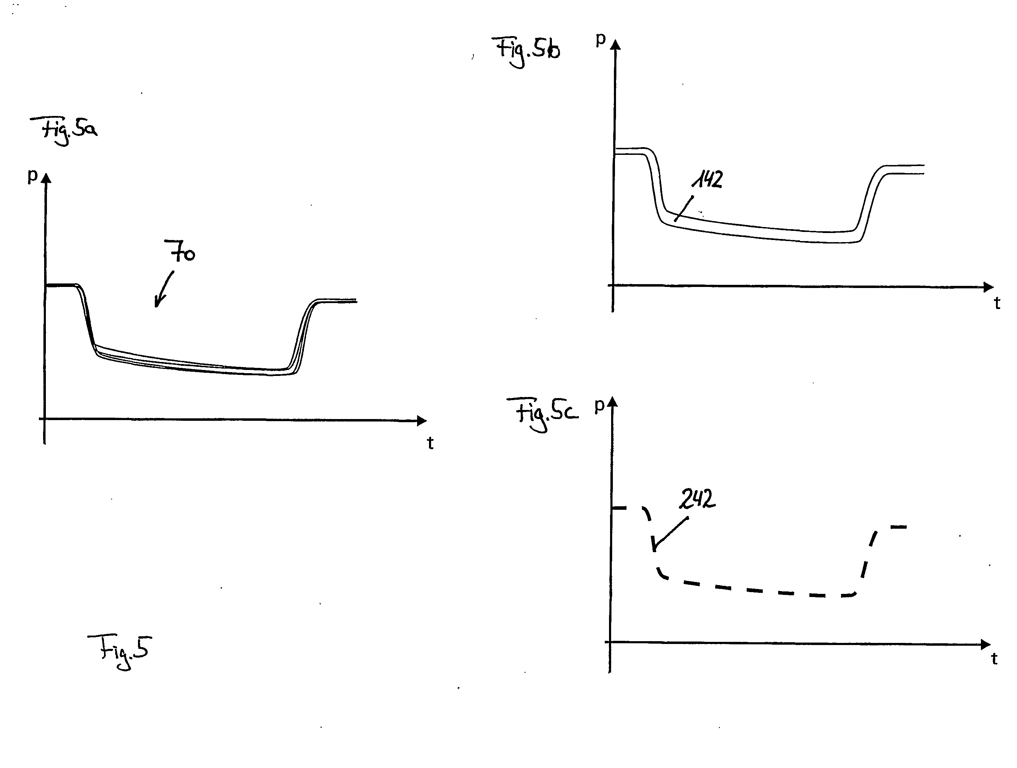

In Figur 5 ist das Zustandekommen von Zustandsgrößen-Sollwertebereichen für die bevorzugten Ausführungsformen der Erfindung gezeigt. In Figur 5a ist in einem Druck-Zeit-Diagramm (die Zeit ist an der Abszisse, der Druck an der Ordinate aufgetragen) einestatistisch signifikante Schar 70 von Druck-Zeit Verläufen gezeigt, die an einem unter identischen Betriebsparametereinstellungen mit identischen Betriebsmitteln durchgeführten Dosierungsvorgang gemessen wurden. In Figur 5b ist ein Zustandsgrößen-Sollwertebereich bzw. Druck-Sollwertebereich 142 gezeigt, der z.B. durch Einhüllende der Schar 70 von Figur 5a zu höheren und niedrigeren Druckwerten hin begrenzt ist.

Demgegenüber ist in Figur 5c eine Referenzkurve 242 dargestellt, die sich aus der Schar 70 beispielsweise durch Mittelwertbildung ergibt.

Diese Referenzkurve 242 kann durch Korrelationsrechenverfahren, wie z. B. Spektralanalyseverfahren, bevorzugt Fast-Fourier-Transformation oder/und Wavelets-Verfahren und/oder numerische Faltung, mit einem aktuellgemessenen Druck-Zeit-Verlauf verglichen werden, der bei einem zu beurteilenden Dosierungsvorgang gemessen wurde. Abhängig von dem daraus resultierenden Übereinstimmungsgrad kann die Qualität des jeweiligen Dosierungsvorgangs beurteilt werden (Numerische Mathematik, H. R. Schwarz, Teubner Verlag Stuttgart; "Ingenieur Analysis" 1 und 2 Christian Blatter, Springer Verlag 1996).

Der Übereinstimmungsgrad ist üblicherweise eine Zahl, die derart normiert wird, dass sie einen Wert zwischen 0 und 1 aufweist, wobei 1 der Wert für identische Übereinstimmung ist. Ein Übereinstimmungsgrad-Sollwertebereich, der beispielsweise von 0,9 bis 1 reicht, gibt den Wertebereich an, für dessen Übereinstimmungsgrad-Werte ein Dosierungsvorgang als fehlerfrei beurteilt wird. In einem Wertebereich von beispielsweise 0,4 bis 0,9 kann eine fragliche Qualität der Pipettierung angenommen werden, wobei im Einzelfall zu entscheiden ist, ob die Pipettierung zu verwerfen ist oder nicht Im übrigen Wertebereich (im Beispiel: O bis 0,4) wird eine schwerwiegende Fehlpipettierung festgestellt.

## Patentansprüche

1. Verfahren zur Beurteilung eines Flüssigkeitsdosierungsvorgangs in einer zumindest teilweise mit einem Gas, vorzugsweise mit Luft, gefüllten Pipette, insbesondere eines Aspirations- oder/und Dispensationsvorgangs beim Pipettieren, bei welchem Verfahren ein zeitlicher Verlauf (40, 40') wenigstens einer Zustandsgröße (p) eines in der Pipette vorhandenen Mediums im Wesentlichen über die gesamte Dauer des Dosierungsvorgangs erfasst wird und bei welchem ermittelt wird, ob der zeitliche Verlauf (40; 40') der wenigstens einen Zustandsgröße (p) innerhalb eines vorbestimmten, einer Sollkurve folgenden Zustandsgrößen-Sollwertebereichs (42; 42') liegt, wobei in Abhängigkeit vom Ermittlungsergebnis ein Beurteilungsergebnis (S6, S14, S16) ausgegeben wird, **dadurch gekennzeichnet, dass** man den zeitlichen Verlauf der wenigstens einen Zustandsgröße (p) während der Änderung der Flüssigkeitsmenge in der Pipette erfasst und mit einem zugeordneten Zustandsgrößen-Sollwertebereich (42; 42') vergleicht.

2. Verfahren nach Anspruch 1, **dadurch gekennzeichnet, dass** der Flüssigkeitsdosierungsvorgang als fehlerhaft beurteilt wird, wenn ermittelt wird, dass der erfasste zeitliche Verlauf (40; 40') der wenigstens einen Zustandsgröße (p) zumindest abschnittsweise außerhalb des Zusfiandsgrößen-Sollwertebereichs (42; 42') liegt.

3. Verfahren nach Anspruch 1 oder 2, **dadurch gekennzeichnet, dass** dann, wenn der zeitliche Verlauf (40; 40') der wenigstens einen Zustandsgröße (p) zumindest abschnittsweise außerhalb des Zustandsgrößen-Sollwertebereichs (42; 42') liegt, ermittelt wird, ob der Verlauf der wenigstens einen Zustandsgröße (p) zumindest abschnittsweise in wenigstens einem Fehlerbereich aus einer Mehrzahl von Fehlerbereichen (44, 46, 48, 50, 52, 54, 56, 58; 46', 48', 52', 56') eines außerhalb des Zustandsgrößen-Sollwertebereichs (42; 42') liegenden Zustandsgrößen-Wertebereichs liegt, und in Abhängigkeit von dem wenigstens einen durchlaufenen Fehlerbereich (46') eine Fehlermeldung ausgegeben wird.

4. Verfahren nach einem der vorgehenden Ansprüche, **dadurch gekennzeichnet, dass** die Ermittlung, ob der zeitliche Verlauf der wenigstens einen Zustandsgröße (p) innerhalb des vorbestimmten Zustandsgrößen-Sollwertebereichs (42; 42') liegt, durch einen Vergleich des Verlaufs (40; 40') mit einer den Zustandsgrößen-Sollwertebereich (42; 42') zu größeren Zustandsgrößenwerten hin begrenzenden oberen Schwellenkurve (62; 62') und mit einer den Zustandsgrößen-Sollwertebereich zu kleineren Zustandsgrößenwerten hin begrenzenden unteren Schweltenkurve (60; 60') durchgeführt wird.

5. Verfahren nach Anspruch 1 oder 2, **dadurch gekennzeichnet, dass** die Ermittlung, ob der zeitliche Verlauf (40; 40') der wenigstens einen Zustandsgröße (p) innerhalb des vorbestimmten Zustandsgrößen-Sollwertebereichs (42; 42') liegt, durch Bildverarbeitung durchgeführt wird.

6. Verfahren zur Beurteilung eines Flüssigkeitsdosierungsvorgangs in einer zumindest teilweise mit einem Gas, vorzugsweise mit Luft, gefüllten Pipette, insbesondere eines Aspirations- oder/und Dispensationsvorgangs beim Pipettieren, bei welchem Verfahren ein zeitlicher Verlauf (40, 40') wenigstens einer Zustandsgröße (p) eines in der Pipette vorhandenen Mediums im Wesentlichen über die gesamte Dauer des Dosierungsvorgangs erfasst und der im Wesentlichen gesamte zeitliche Verlauf (40; 40') der wenigstens einen Zustandsgröße (p) mit einem vorbestimmten einer Sollkurve folgenden Zustandsgrößen-Sollwertebereich (242) verglichen wird, **dadurch gekennzeichnet dass** man den zeitlichen Verlauf der wenigstens einen Zustandsgröße (p) während der Änderung der Flüssigkeitsmenge in der Pipette erfasst und mit einem zugeordneten Zustandsgrößen-Sollwertebereich (242) vergleicht, wobei mittels Korrelationsrechenverfahren ein Übereinstimmungsgrad des zeitlichen Verlaufs der wenigstens einen Zustandsgröße (p) mit einer vorbestimmten Referenzkurve als Zustandsgrößen-Sollwertebereich (242) ermittelt wird, und wobei in Abhängigkeit vom Ermittlungsergebnis ein Beurteilungsergebnis ausgegeben wird.

7. Verfahren nach Anspruch 6, **dadurch gekennzeichnet, dass** der Übereinstimmungsgrad als Ermittlungsergebnis ein numerischer Wert ist, wobei der Flüssigkeitsdosiervorgang als fehlerhaft beurteilt wird, wenn der Übereinstimmungsgrad außerhalb eines vorbestimmten Übereinstimmungsgrad-Sollwertebereichs liegt.

8. Verfahren nach einem der Ansprüche 6 oder 7, **dadurch gekennzeichnet, dass** dann, wenn der Übereinstimmungsgrad als außerhalb des vorbestimmten Übereinstimmungsgrad-Sollwertebereichs liegend erfasst wird, ermittelt wird, ob der Übereinstimmungsgrad in einem Fehlerbereich aus einer Mehrzahl von Fehlerbereichen eines außerhalb des Übereinstimmungs-Sollwertebereichsliegenden Übereinstimmungsgrad-Wertebereichs liegt, und dass in Abhängigkeit von dem Fehlerbereich, in dem der Übereinstimmungsgrad liegt, eine Fehlermeldung ausgegeben wird.

9. Verfahren nach einem der Ansprüche 6 bis 8, **dadurch gekennzeichnet, dass** das Korrelationsrechenverfahren als Eingangsgröße Stützpunkte aus dem zeitlichen Verlauf der wenigstens einen Zustandsgröße (p) und aus der Referenzkurve verwendet.

10. Verfahren nach einem der vorhergehenden Ansprüche, **dadurch gekennzeichnet, dass** das Medium das in der Pipette vorhandene Gas ist.

11. Verfahren nach einem der vorhergehenden Ansprüche, **dadurch gekennzeichnet, dass** die Zustandsgröße der Druck (p) und/oder die Temperatur des Mediums ist.

12. Verfahren nach einem der vorhergehenden Ansprüche, **dadurch gekennzeichnet, dass** der Zustandsgrößen-Sollwertebereich (42; 42'; 242) wenigstens für die gesamte Dauer des Flüssigkeitsdosierungsvorganges definiert ist, vorzugsweise auch für die Dauer eines zwischenzeitlichen Transportvorgangs.

13. Verfahren nach einem der vorhergehenden Ansprüche, **dadurch gekennzeichnet, dass** der Zustandsgrößen-Sollwertebereich (42; 42'; 242) eines Flüssigkeits-Dosierungsvorgangs auf einer Mehrzahl von Durchführungen (70) des im Wesentlichen gleichen Flüssigkeitsdosiervorgangs unter Verwendung der im Wesentlichen gleichen Vorgangsparameter beruht.

14. Vorrichtung zur Beurteilung eines Vorgangs einer Flüssigkeitsdosierung in einer zumindest teilweise mit Gas, vorzugsweise mit Luft, gefüllten Pipette unter Verwendung des Verfahrens nach einem der Ansprüche 1 bis 5 oder 10 bis 13 unter Rückbeziehung auf wenigstens einen der Ansprüche 1 bis 5, wobei die Vorrichtung umfasst:
- wenigstens einen Sensor, welcher dazu ausgebildet ist, den zeitlichen Verlauf (40; 40') wenigstens einer Zustandsgröße (p) eines in der Pipette vorhandenen Mediums, vorzugsweise des Gases, während der Änderung der Flüssigkeitsmenge in der Pipette zu erfassen,
- einen Datenspeicher zur Speicherung eines vorbestimmten einer Sollkurve folgenden Zustandsgrößen-Sollwertebereichs (42; 42'; 242) sowie zur Speicherung von vom Sensor erfassten Zustandsgrößenwerten (p),
- eine Datenverarbeitungseinheit, welche dazu ausgebildet ist, den zeitlichen Verlauf (40; 40') der wenigstens einen Zustandsgröße (p) während der Änderung der Flüssigkeitsmenge in der Pipette mit dem vorbestimmten Zustandsgrößen-Sollwertebereich (42; 42') zu vergleichen und zu ermitteln, ob der zeitliche Verlauf (40; 40') der wenigstens einen Zustandsgröße (p) innerhalb des vorbestimmten Zustandsgrößen-Sollwertebereichs (42; 42') liegt, sowie
- eine Ausgabeeinheit zur Ausgabe eines Beurteilungsergebnisses (S6, S14, S16) in Abhängigkeit von dem Ermittlungsergebnis durch die Datenverarbeitungseinheit.

15. Vorrichtung nach Anspruch 14, **dadurch gekennzeichnet, dass** in dem Datenspeicher weiterhin eine Mehrzahl von vorbestimmten Fehlerbereichen (44, 46, 48, 50, 52, 54, 56, 58; 46', 48', 52', 56') gespeichert ist, wobei jedem Fehlerbereich (44, 46, 48, 50, 52, 54, 56, 58; 46', 48', 52', 56') wenigstens ein möglicher Fehler des Dosiervorgangs zugeordnet ist.

16. Vorrichtung nach einem der Ansprüche 14 oder 15, **dadurch gekennzeichnet, dass** die Vorrichtung weiterhin eine Editiereinheit zur Erstellung des Zustandsgrößen-Sollwertebereichs umfasst.

17. Vorrichtung nach Anspruch 16, **dadurch gekennzeichnet, dass** die Vorrichtung eine mit der Editiereinheit verbundene Eingabeeinheit umfasst.

18. Vorrichtung nach Anspruch 17, **dadurch gekennzeichnet, dass** die Ausgabeeinheit eine graphische Ausgabeeinheit ist, und dass über die Eingabeeinheit ein Zustandsgrößen-Sollwertebereich graphisch festlegbar ist.

19. Vorrichtung zur Beurteilung eines Vorgangs einer Flüssigkeitsdosierung in einer zumindest teilweise mit Gas, vorzugsweise mit Luft, gefüllten Pipette unter Verwendung des Verfahrens nach einem der Ansprüche 6 bis 9 oder 10 bis 13 unter Rückbeziehnung auf wenigstens einen der Ansprüche 6 bis 9, wobei die Vorrichtung umfasst:
- wenigstens einen Sensor, welcher dazu ausgebildet ist, den zeitlichen Verlauf (40; 40') wenigstens einer Zustandsgröße (p) eines in der Pipette vorhandenen Mediums, vorzugsweise des Gases, während der Änderung der Flüssgkeitsmenge in der Pipette zu erfassen,
- einen Datenspeicher zur Speicherung einer vorbestimmten Referenzkurve (242) als Zustandsgrößen-Sollwertebereich (242) sowie zur Speicherung von vom Sensor erfassten Zustandsgrößenwerten (p),
- eine Datenverarbeitungseinheit, welche dazu ausgebildet ist, den zeitlichen Verlauf (40; 40') der wenigstens einen Zustandsgröße (p) während der Änderung der Flüssigkeitsmenge in der Pipette mit einem zugeordneten Zustandsgrößen-Soilwertebereich (242) zu vergleichen, wobei die Datenverarbeitungseinheit ferner dazu ausgelegt ist, ein Korrelationsrechenverfahren zur Ermittlung eines Übereinstimmungsgrades des zeitlichen Verlaufs der wenigstens einen Zustandsgröße mit der vorbestimmten Referenzkurve als Zustandsgrößen-Sollwertebereich (242) durchzuführen,
- eine Ausgabeeinheit zur Ausgabe eines Beurteilungsergebnisses (S6, S14, S16) in Abhängigkeit von dem Ergebnis des Vergleichs durch die Datenverarbeitungseinheit.

20. Vorrichtung nach Anspruch 19, **dadurch gekennzeichnet, dass** in dem Datenspeicher ein vorbestimmter Übereinstimmungsgrad-Sollwertebereich gespeichert ist.

21. Vorrichtung nach Anspruch 19 und 20, **dadurch gekennzeichnet, dass** die Datenverarbeitungseinheit ermittelt, ob der Übereinstimmungsgrad innerhalb des vorbestimmten Übereinstimmungsgrad-Sollwertebereichs liegt.

22. Pipettieranlage mit einer Beurteilungsvorrichtung nach einem der Ansprüche 14 bis 18 oder/und 19 bis 21.

## Claims

1. Method of evaluating a liquid dosing process in a pipette which is at least partially filled with a gas, preferably with air, in particular an aspiration and/or dispensing process in pipetting, in which process a time characteristic (40, 40') of at least one state variable (p) of a medium present in the pipette is determined substantially over the entire duration of the dosing process and in which it is determined whether the time characteristic (40; 40') of the at least one state variable (p) lies within a predetermined state variable setpoint range (42; 42') following a setpoint curve, wherein an evaluation result (S6, S 14, S 16) is output dependent upon the result of the determination, **characterised in that** the time characteristic of the at least one state variable (p) is determined during the change in the amount of liquid in the pipette and compared with an associated state variable setpoint range (42; 42').

2. Method according to claim 1, **characterised in that** the liquid dosing process is evaluated to be incorrect if it is determined that the detected time characteristic (40, 40') pf the at least one state variable (p) lies, at least in sections, outside the state variable setpoint range (42; 42').

3. Method according to either claim 1 or claim 2, **characterised in that** if at least sections of the time characteristic (40; 40') of the at least one state variable (p) lie outside the state variable setpoint range (42; 42'), it is determined whether the characteristic of the at least sections of the at least one state variable (p) lie in one error range from a plurality of error ranges (44, 46, 48, 50, 52, 54, 56, 58; 46', 48', 52', 56') of a state variable range of values, which lies outside the state variable setpoint range (42; 42'), and an error message is output dependent upon the at least one error range (46') which has been passed through.

4. Method according to any one of the preceding claims, **characterised in that** the determination as to whether the time characteristic of the at least one state variable (p) lies within the predetermined state variable setpoint range (42; 42') is performed by comparing the characteristic (40, 40') with an upper threshold curve (62; 62') which delimits the state variable setpoint range (42; 42') in the direction of larger state variables and with a lower threshold curve (60; 60') which delimits the state variable setpoint range in the direction of smaller state variable values.

5. Method according to either claim 1 or claim 2, **characterised in that** the determination whether the time characteristic (40; 40') of the at least one state variable (p) lies within the predetermined state variable setpoint range (42; 42') is carried out by image processing.

6. Method of evaluating a liquid dosing process in a pipette which is filled at least partially with a gas, preferably with air, in particular an aspiration and/or dispensing process in pipetting, in which process a time characteristic (40, 40') of at least one state variable (p) of a medium present in the pipette is determined substantially over the entire duration of the dosing process, and substantially the entire time characteristic (40; 40') of the at least one state variable (p) is compared with a predetermined state variable setpoint range (242) following a set point curve, **characterised in that** the time characteristic of the at least one state variable (p) is determined during the change in the amount of liquid in the pipette, and compared with an associated state variable setpoint range (242), wherein, by using a correlation calculation method, a degree of correspondence of the time characteristic of the at least state variable (p) is determined with a predetermined reference curve as a state variable setpoint range (242), and wherein an evaluation result is output as a function of the result of the determination.

7. Method according to claim 6, **characterised in that** the degree of correspondence as an evaluation result is a numerical value, wherein the liquid dosing process is evaluated as incorrect, if the degree of correspondence lies outside a predetermined degree of correspondence setpoint range.

8. Method according to either claim 6 or claim 7, **characterised in that** if the degree of correspondence is found to lie outside the predetermined degree of correspondence setpoint range, it is determined whether the degree of correspondence lies in an error range from a plurality of error ranges of a degree of correspondence value range that lies outside the setpoint range for degree of correspondence, and **in that** an error message is output dependent upon the error range in which the degree of correspondence lies.

9. Method according to any one of claims 6 to 8, **characterised in that** the correlation calculation method uses as interpolation points from the time characteristic of at least one state variable (p) and from the reference curve as the input variable.

10. Method according to any one of the preceding claims, **characterised in that** the medium is the gas present in the pipette.

11. Method according to any one of the preceding claims, **characterised in that** the state variable is the pressure (p) and/or the temperature of the medium.

12. Method according to any one of the preceding claims, **characterised in that** the state variable setpoint range (42; 42'; 242) is defined at least for the entire duration of the liquid dosing process, preferably also for the duration of the interim transport process.

13. Method according to any one of the preceding claims, **characterised in that** the state variable setpoint range (42; 42'; 242) of a liquid dosing process is based on a plurality of performances (70) of substantially the same liquid dosing process using substantially the same operating parameters.

14. Device for evaluating a liquid dosing process in a pipette which is filled at least partially with gas, preferably with air, using the method according to any one of claims 1 to 5 or 10 to 13, with reference to at least one of claims 1 to 5, wherein the device comprises:
- at least one sensor which is configured to determine the time characteristic (40; 40') of at least one state variable (p) of a medium present in the pipette, preferably of the gas, during the change in the amount of liquid in the pipette,
- a data memory for storing a predetermined state variable setpoint range (42; 42'; 242) following a setpoint curve, as well as for storing the state variable values (p) determined by the sensor,
- a data processing unit which is configured to compare the time characteristic (40; 40') of the at least one state variable (p) during the change in the amount of liquid in the pipette with the predetermined state variable setpoint range (42; 42') and to determine whether the time characteristic (40; 40') of the at least one state variable (p) lies within the predetermined state variable setpoint range (42; 42'), as well as
- an output unit for issuing an evaluation result (S6, S14, S16) as a function of the evaluation result from the data processing unit.

15. Device according to claim 14, **characterised in that** further a plurality of predetermined error ranges (44, 46, 48, 50, 52, 54, 56, 58; 46', 48', 52', 56') is stored in the data memory, wherein at least one possible error of the dosing process is assigned to each error range (44, 46, 48, 50, 52, 54, 56, 58; 46', 48', 52', 56').

16. Device according to either claim 14 or claim 15, **characterised in that** the device further comprises an editing unit for producing a state variable setpoint range.

17. Device according to claim 16, **characterised in that** the device comprises an input unit connected to the editing unit.

18. Device according to claim 17, **characterised in that** the output unit is a graphic output unit and a state variable setpoint range can be graphically defined via the input unit.

19. Device for evaluating a liquid dosing process in a pipette filled at least partially with gas, preferably with air, and using the method according to any one of claims 6 to 9 or 10 to 13 and with reference to at least one of claims 6 to 9, wherein the device comprises:
- at least one sensor which is configured to determine the time characteristic (40; 40') of at least one state variable (p) of a medium present in the pipette, preferably of the gas, during the change in the amount of liquid in the pipette,
- a data memory for storing a predetermined reference curve (242) as a state variable setpoint range (242), as well as for storing variables determined by the sensor (p),
- a data processing unit which is configured to compare the time characteristic (40; 40') of the at least one state variable (p) during the change in the amount of liquid in the pipette with the designated state variable setpoint range (242), wherein the data processing unit is further formed to carry out a correlation calculation method to determine a degree of correspondence of the time characteristic of the at least one state variable with the predetermined reference curve as the state variable setpoint range (242),
- an output unit for issuing an evaluation result (S6, S 14, S16) as a function of the evaluation result from the data processing unit.

20. Device according to claim 19, **characterised in that** a predetermined degree of correspondence setpoint range is stored in the data memory.

21. Device according to claim 19 and claim 20, **characterised in that** the data processing unit determines whether the degree of correspondence lies within the predetermined degree of correspondence setpoint range.

22. Pipetting system with an evaluating system according to any one of claims 14 to 18 and/or 19 to 21.

## Revendications

1. Procédé d'évaluation d'un processus de dosage d'un liquide dans une pipette remplie au moins partiellement d'un gaz, de préférence l'air, en particulier un procédé d'aspiration et/ou de dispensation lors du pipetage, dans lequel procédé une variation dans le temps (40 ; 40') d'au moins un paramètre d'état (p) d'un fluide contenu dans la pipette est enregistrée sensiblement pendant toute la durée du processus de dosage et dans lequel il est déterminé si la variation dans le temps (40 ; 40') dudit au moins un paramètre d'état (p) se situe à l'intérieur d'un domaine prédéfini de valeurs de consigne pour paramètres d'état (42 ; 42') suivant une courbe théorique, un résultat d'évaluation (S6, S14, S16) étant délivré en fonction du résultat de détermination, **caractérisé en ce que** la variation dans le temps dudit au moins un paramètre d'état (p) est enregistrée pendant la variation de la quantité de liquide dans la pipette et est comparée à un domaine correspondant de valeurs de consigne pour paramètres d'état (42 ; 42').

2. Procédé selon la revendication 1, **caractérisé en ce que** le processus de dosage d'un liquide est jugé inexact s'il a été déterminé que la variation dans le temps (40 ; 40') enregistrée pour ledit au moins un paramètre d'état (p) se situe au moins par zones en dehors du domaine de valeurs de consigne pour paramètres d'état (42 ; 42').

3. Procédé selon la revendication 1 ou 2, **caractérisé en ce que**, lorsque la variation dans le temps (40 ; 40') dudit au moins un paramètre d'état (p) se situe au moins par zones en dehors du domaine de valeurs de consigne pour paramètres d'état (42 ; 42'), il est déterminé si la variation dudit au moins un paramètre d'état (p) se situe au moins par zones dans au moins un domaine d'erreurs parmi une pluralité de domaines d'erreurs (44, 46, 48, 50, 52, 54, 56, 58 ; 46' 48', 52', 56') d'une plage de valeurs pour paramètres d'état située en dehors du domaine de valeurs de consigne pour paramètres d'état (42 ; 42'), et un message d'erreur est délivré en fonction dudit au moins un domaine d'erreur (46') parcouru.

4. Procédé selon l'une quelconque des revendications précédentes, **caractérisé en ce que** pour déterminer, si la variation dans le temps dudit au moins un paramètre d'état (p) se situe à l'intérieur du domaine prédéfini de valeurs de consigne pour paramètres d'état (42 ; 42'), il est effectué une comparaison de la courbe (40 ; 40') avec une courbe de seuil supérieur (62 ; 62') limitant le domaine de valeurs de consigne pour paramètres d'état (42 ; 42') vers les valeurs plus élevées des paramètres d'état et avec une courbe de seuil inférieur (60 ; 60') limitant le domaine de valeurs de consigne pour paramètres d'état vers les valeurs plus faibles des paramètres d'état.

5. Procédé selon la revendication 1 ou 2, **caractérisé en ce que** pour déterminer, si la variation dans le temps (40 ; 40') dudit au moins un paramètre d'état (p) se situe à l'intérieur du domaine prédéfini de valeurs de consigne pour paramètres d'état (42 ; 42'), il est effectué un traitement de l'image.

6. Procédé d'évaluation d'un processus de dosage d'un liquide dans une pipette remplie au moins partiellement d'un gaz, de préférence l'air, en particulier un procédé d'aspiration et/ou de dispensation lors du pipetage, dans lequel procédé une variation dans le temps (40 ; 40') d'au moins un paramètre d'état (p) d'un fluide contenu dans la pipette est enregistrée sensiblement pendant toute la durée du processus de dosage et la variation dans le temps (40 ; 40') sensiblement totale dudit au moins un paramètre d'état (p) est comparée à un domaine prédéfini de valeurs de consigne pour paramètres d'état (242) suivant une courbe théorique, **caractérisé en ce que** la variation dans le temps dudit au moins un paramètre d'état (p) est enregistrée pendant la variation de la quantité de liquide dans la pipette et est comparée à un domaine correspondant de valeurs de consigne pour paramètres d'état (242), un degré de concordance entre la variation dans le temps dudit au moins un paramètre d'état (p) et une courbe de référence prédéfinie comme domaine de valeurs de consigne pour paramètres d'état (242) étant déterminé au moyen d'un procédé de calcul de corrélation, et un résultat d'évaluation étant délivré en fonction du résultat de détermination.

7. Procédé selon la revendication 6, **caractérisé en ce que** le degré de concordance en tant que résultat de détermination est une valeur numérique, le processus de dosage d'un liquide étant jugé inexact lorsque le degré de concordance se situe en dehors d'un domaine prédéfini de valeurs de consigne pour le degré de concordance.

8. Procédé selon la revendication 6 ou 7, **caractérisé en ce que**, lorsqu'il est détecté que le degré de concordance se situe en dehors du domaine de valeurs de consigne pour le degré de concordance, il est déterminé si le degré de concordance se situe dans un domaine d'erreurs parmi une pluralité de domaines d'erreurs d'une plage de valeurs pour le degré de concordance située en dehors du domaine de valeurs de consigne pour le degré de concordance, et **en ce qu'**un message d'erreur est délivré en fonction du domaine d'erreur dans lequel se situe le degré de concordance.

9. Procédé selon l'une quelconque des revendications 6 à 8, **caractérisé en ce que** le procédé de calcul de corrélation utilise comme grandeur d'entrée des points de référence prélevés dans la courbe de variation dans le temps dudit au moins un paramètre d'état (p) et dans la courbe de référence.

10. Procédé selon l'une quelconque des revendications précédentes, **caractérisé en ce que** le fluide contenu dans la pipette est un gaz.

11. Procédé selon l'une quelconque des revendications précédentes, **caractérisé en ce que** le paramètre d'état est la pression (p) et/ou la température du fluide.

12. Procédé selon l'une quelconque des revendications précédentes, **caractérisé en ce que** le domaine de valeurs de consigne pour paramètres d'état (42 ; 42' ; 242) est défini au moins pour toute la durée du processus de dosage d'un liquide, de préférence aussi pour la durée d'un processus de transport transitoire.

13. Procédé selon l'une quelconque des revendications précédentes, **caractérisé en ce que** le domaine de valeurs de consigne pour paramètres d'état (42 ; 42' ; 242) d'un processus de dosage d'un liquide se fonde sur une pluralité de mises en oeuvre (70) du processus sensiblement identique de dosage d'un liquide moyennant l'utilisation des paramètres de processus sensiblement identiques.

14. Dispositif d'évaluation d'un processus de dosage d'un liquide dans une pipette remplie au moins partiellement d'un gaz, de préférence l'air, moyennant l'utilisation du procédé selon l'une quelconque des revendications 1 à 5 ou 10 à 13, se référant à au moins une des revendications 1 à 5, ledit dispositif comportant :
- au moins un capteur, conçu pour détecter la variation dans le temps (40 ; 40') d'au moins un paramètre d'état (p) d'un fluide contenu dans la pipette, de préférence le gaz, pendant la variation de la quantité de liquide dans la pipette ;
- une mémoire de données destinée à stocker un domaine prédéfini de valeurs de consigne pour paramètres d'état (42 ; 42' ; 242) suivant une courbe théorique, ainsi qu'à stocker des valeurs du paramètre d'état (p) détectées par le capteur ;
- une unité de traitement des données, conçue pour comparer la variation dans le temps (40 ; 40') dudit au moins un paramètre d'état (p) pendant la variation de la quantité de liquide dans la pipette à un domaine prédéfini de valeurs de consigne pour paramètres d'état (42 ; 42'), et pour déterminer si la variation dans le temps (40 ; 40') dudit au moins un paramètre d'état (p) se situe à l'intérieur du domaine prédéfini de valeurs de consigne pour paramètres d'état (42 ; 42') ; ainsi que
- une unité de sortie destinée à délivrer un résultat d'évaluation (S6, S14, S16) en fonction du résultat de détermination effectué par l'unité de traitement des données.

15. Dispositif selon la revendication 14, **caractérisé en ce que** dans la mémoire de données est stockée en outre une pluralité de domaines d'erreurs (44, 46, 48, 50, 52, 54, 56, 58 ; 46' 48', 52', 56'), au moins une erreur possible de chaque processus de dosage étant affectée à chaque domaine d'erreurs (44, 46, 48, 50, 52, 54, 56, 58 ; 46' 48', 52', 56').

16. Dispositif selon la revendication 14 ou 15, **caractérisé en ce que** le dispositif comporte en outre une unité d'édition destinée à générer le domaine de valeurs de consigne pour paramètres d'état.

17. Dispositif selon la revendication 16, **caractérisé en ce que** le dispositif comporte une unité d'entrée reliée à l'unité d'édition.

18. Dispositif selon la revendication 17, **caractérisé en ce que** l'unité de sortie est une unité de sortie graphique et **en ce qu'**un domaine de valeurs de consigne pour paramètres d'état peut être défini graphiquement par l'intermédiaire de l'unité d'entrée.

19. Dispositif d'évaluation d'un processus de dosage d'un liquide dans une pipette remplie au moins partiellement d'un gaz, de préférence l'air, moyennant l'utilisation du procédé selon l'une quelconque des revendications 6 à 9 ou 10 à 13, se référant à au moins une des revendications 6 à 9, ledit dispositif comportant :
- au moins un capteur, conçu pour détecter la variation dans le temps (40 ; 40') d'au moins un paramètre d'état (p) d'un fluide contenu dans la pipette, de préférence le gaz, pendant la variation de la quantité de liquide dans la pipette ;
- une mémoire de données destinée à stocker une courbe de référence (242) prédéfinie en tant que domaine de valeurs de consigne pour paramètres d'état (242), ainsi qu'à stocker des valeurs des paramètres d'état (p) détectées par le capteur ;
- une unité de traitement des données, conçue pour comparer la variation dans le temps (40 ; 40') dudit au moins un paramètre d'état (p), pendant la variation de la quantité de liquide dans la pipette, à un domaine correspondant de valeurs de consigne pour paramètres d'état (242), l'unité de traitement des données étant conçue en outre pour la mise en oeuvre d'un procédé de calcul de corrélation destiné à déterminer un degré de concordance entre la variation dans le temps dudit au moins un paramètre d'état et la courbe de référence prédéfinie en tant que domaine de valeurs de consigne pour paramètres d'état (242)
- une unité de sortie destinée à délivrer un résultat d'évaluation (S6, S14, S16) en fonction du résultat de la comparaison effectuée par l'unité de traitement des données.

20. Dispositif selon la revendication 19, **caractérisé en ce que** dans la mémoire de données est stocké un domaine de valeurs de consigne pour le degré de concordance.

21. Dispositif selon les revendications 19 et 20, **caractérisé en ce que** l'unité de traitement des données détermine si le degré de concordance se situé à l'intérieur du domaine prédéfini de valeurs de consigne pour le degré de concordance.

22. Installation de pipetage comportant un dispositif d'évaluation selon l'une quelconque des revendications 14 à 18 et/ou 19 à 21.
